(19) Europäisches Patentamt / European Patent Office / Office européen des brevets

(11) **EP 4 475 569 A1**

(12) **EUROPEAN PATENT APPLICATION**
published in accordance with Art. 153(4) EPC

(43) Date of publication:
**11.12.2024 Bulletin 2024/50**

(21) Application number: **23759278.7**

(22) Date of filing: **24.02.2023**

(51) International Patent Classification (IPC):
**H04W 4/02** (2018.01)

(52) Cooperative Patent Classification (CPC):
**H04L 25/02; H04W 4/02; H04W 64/00**

(86) International application number:
**PCT/CN2023/078190**

(87) International publication number:
**WO 2023/160656 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.02.2022 CN 202210191893**

(71) Applicant: **Huawei Technologies Co., Ltd.
Shenzhen, Guangdong 518129 (CN)**

(72) Inventors:
• **SUN, Yaqi
Shenzhen, Guangdong 518129 (CN)**
• **WU, Yiqun
Shenzhen, Guangdong 518129 (CN)**
• **SUN, Yan
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **COMMUNICATION METHOD AND APPARATUS**

(57) This disclosure provides a communication method and apparatus, to improve positioning performance. The method includes: obtaining M pieces of first channel estimation information, where an $m^{th}$ piece of first channel estimation information in the M pieces of first channel estimation information is estimation information of a channel between an $m^{th}$ cell node in M cell nodes and a terminal device, M is a positive integer greater than 1, and m is a positive integer from 1 to M; and determining M pieces of second channel estimation information based on at least one of the M pieces of first channel estimation information, where an $m^{th}$ piece of second channel estimation information in the M pieces of second channel estimation information corresponds to the channel between the $m^{th}$ cell node and the terminal device.

FIG. 8

**Description**

**CROSS-REFERENCE TO RELATED APPLICATIONS**

This application claims priority to Chinese Patent Application No. 202210191893.7, filed with the China National Intellectual Property Administration on February 28, 2022 and entitled "COMMUNICATION METHOD AND APPARATUS", which is incorporated herein by reference in its entirety.

**TECHNICAL FIELD**

This disclosure relates to the field of communication technologies, and in particular, to a communication method and apparatus.

**BACKGROUND**

In a wireless communication network, for example, in a mobile communication network, services supported by the network are increasingly diversified, and therefore, requirements that need to be met are also increasingly diversified. For example, the network needs to be capable of supporting an ultra-high rate, an ultra-low latency, and/or an ultra-large connection. These features make network planning, network configuration, and/or resource scheduling increasingly complex. In addition, because the network has increasingly powerful functions, for example, supporting an increasingly high spectrum and supporting new technologies such as a high-order multiple-input multiple-output (multiple-input multiple-output, MIMO) technology, beamforming, and/or beam management, network energy saving becomes a hot research topic. These new requirements, scenarios, and features bring unprecedented challenges to network planning, operation and maintenance, and efficient operation. To address these challenges, an artificial intelligence technology may be introduced into the wireless communication network, to implement network intelligence. Based on this, how to effectively implement artificial intelligence in the network is a problem worth studying.

**SUMMARY**

This disclosure provides a communication method and apparatus, to improve positioning performance.

According to a first aspect, this disclosure provides a communication method, including:

obtaining M pieces of first channel estimation information, where an $m^{th}$ piece of first channel estimation information in the M pieces of first channel estimation information is estimation information of a channel between an $m^{th}$ cell node in M cell nodes and a terminal device, M is a positive integer greater than 1, and m is a positive integer from 1 to M; and determining M pieces of second channel estimation information based on at least one of the M pieces of first channel estimation information, where an $m^{th}$ piece of second channel estimation information in the M pieces of second channel estimation information corresponds to the channel between the $m^{th}$ cell node and the terminal device.

In this design, the second channel estimation information is inferred based on the first channel estimation information measured by the terminal device or the cell node. The second channel estimation information may be for training a positioning-related model. Such a training manner is more suitable for an actual scenario environment, and can improve performance of the model, thereby improving positioning accuracy. Optionally, the second channel estimation information indicates at least one of the following: in a line-of-sight (line of sight, LOS) condition, a distance between the $m^{th}$ cell node and the terminal device; in the LOS condition, a signal transmission latency or a signal transmission latency difference between the $m^{th}$ cell node and the terminal device; in the LOS condition, a signal angle of departure (angle of departure, AoD) or a signal angle of arrival (angle of arrival, AoA) corresponding to the $m^{th}$ cell node; in the LOS condition, signal quality between the $m^{th}$ cell node and the terminal device; or a type of an actual signal transmission path between the $m^{th}$ cell node and the terminal device, where the path type is LOS or non-line-of-sight (non-line of sight, NLOS).

In a possible design, the second channel estimation information is for training a model. When the model is trained, an input of the model is determined based on channel information of the channel between the $m^{th}$ cell node and the terminal device, and a label corresponding to the input is determined based on the second channel estimation information corresponding to the channel between the $m^{th}$ cell node and the terminal device. Label data that can be used for model training is inferred based on the measured first channel estimation information to help improve the performance of the model.

In a possible design, the method further includes: sending K pieces of second channel estimation information to a first device. The K pieces of second channel estimation information are included in the M pieces of second channel estimation information, and K is a positive integer. In this design, corresponding models can be trained for different cell nodes, so that training and application of the model are more flexible.

In a possible design, the method further includes: obtaining training request information from the first device. The training request information is for requesting the K pieces of second channel estimation information.

In a possible design, the training request information indicates a parameter type indicated by the second channel estimation information. In this design, the parameter type indicated by the second channel estimation information is specified, so that a waste of transmission resources caused by additional information is reduced, and signaling overheads can be reduced.

In a possible design, the obtaining M pieces of first channel estimation information includes: obtaining the $m^{th}$ piece of first channel estimation information from the first device, where the first device is the $m^{th}$ cell node, or the first device is the terminal device.

In a possible design, the determining M pieces of second channel estimation information based on at least one of the M pieces of first channel estimation information includes: determining a first location of the terminal device based on the at least one of the M pieces of first channel estimation information; and determining the M pieces of second channel estimation information based on the first location of the terminal device and locations of the M cell nodes.

Optionally, the determining a first location of the terminal device based on the at least one of the M pieces of first channel estimation information includes:

determining a plurality of second locations of the terminal device based on the M pieces of first channel estimation information and the locations of the M cell nodes, where a first part of locations in the plurality of second locations are located in a first area, a second part of locations in the plurality of second locations are not located in the first area, and a quantity of locations of the first part is greater than a quantity of locations of the second part; and determining the first location of the terminal device based on the first part of locations in the plurality of second locations; or determining the first location of the terminal device based on N pieces of first channel estimation information and locations of N cell nodes, where the N pieces of first channel estimation information are in a one-to-one correspondence with the N cell nodes, the N cell nodes are included in the M cell nodes, N is a positive integer less than or equal to M, and a path between each of the N cell nodes and the terminal device is line-of-sight.

In this design, a trusted location (that is, the first location) of the terminal device is first estimated based on the first channel estimation information, and then a trusted second channel estimation information is reversely inferred based on the trusted location to train the model, to help improve the performance of the model.

In a possible design, the $m^{th}$ piece of first channel estimation information indicates one or more of the following parameters: the distance between the $m^{th}$ cell node and the terminal device, the signal transmission latency or the signal transmission latency difference between the $m^{th}$ cell node and the terminal device, the signal angle of departure or the signal angle of arrival corresponding to the $m^{th}$ cell node, and the signal quality between the $m^{th}$ cell node and the terminal device; or the $m^{th}$ piece of first channel estimation information indicates that the signal transmission path between the $m^{th}$ cell node and the terminal device is line-of-sight or non-line-of-sight.

In a possible design, the M cell nodes belong to one access network device, or at least two of the M cell nodes belong to different access network devices.

According to a second aspect, this disclosure provides a communication method, including:

sending an $m^{th}$ piece of first channel estimation information, where the $m^{th}$ piece of first channel estimation information belongs to M pieces of first channel estimation information, M is a positive integer greater than 1, m is a positive integer from 1 to M, the $m^{th}$ piece of first channel estimation information in the M pieces of first channel estimation information is estimation information of a channel between an $m^{th}$ cell node in M cell nodes and a terminal device, at least one of the M pieces of first channel estimation information is for determining M pieces of second channel estimation information, and an $m^{th}$ piece of second channel estimation information in the M pieces of second channel estimation information corresponds to the channel between the $m^{th}$ cell node and the terminal device; and obtaining information indicating a model, where when the model is trained, an input of the model is determined based on channel information of the channel between the $m^{th}$ cell node and the terminal device, and a label corresponding to the input is determined based on the second channel estimation information corresponding to the channel between the $m^{th}$ cell node and the terminal device.

In a possible design, the method further includes: sending the channel information of the channel between the $m^{th}$ cell node and the terminal device.

For a parameter indicated by the first channel estimation information and positioning of the M cell nodes, refer to the descriptions in the first aspect. Details are not described herein again in this disclosure.

According to a third aspect, this disclosure provides a communication method, including:

determining K pieces of channel information, where a $k^{th}$ piece of channel information in the K pieces of channel information is channel information of a channel between a $k^{th}$ cell node in K cell nodes and a terminal device, K is a positive integer, and k is a positive integer from 1 to K;

obtaining K pieces of second channel estimation information, where a $k^{th}$ piece of second channel estimation information in the K pieces of second channel estimation information corresponds to the channel between the $k^{th}$ cell node and the terminal device, the K pieces of second channel estimation information are determined based on at least one of M pieces of first channel estimation information, an $m^{th}$ piece of first channel estimation information in the M pieces of first channel estimation information is estimation information of a channel between an $m^{th}$ cell node in M cells and the terminal device, the K cells are included in the M cells, M is a positive integer greater than 1, and m is a positive integer from 1 to M; and

training a model based on the K pieces of second channel estimation information, where when the model is trained, an input of the model is determined based on the channel information of the channel between the $k^{th}$ cell node and the terminal device, and a label corresponding to the input is determined based on the second channel estimation information corresponding to the channel between the $k^{th}$ cell node and the terminal device.

In a possible design, the method further includes: sending training request information, where the training request information is for requesting the K pieces of second channel estimation information.

In a possible design, the training request information indicates a parameter type indicated by the second channel estimation information.

In a possible design, the method further includes: sending the first channel estimation information of the channel between the $m^{th}$ cell node and the terminal device.

For a parameter indicated by the first channel estimation information and positioning of the M cell nodes, refer to the descriptions in the first aspect. Details are not described herein again in this disclosure.

According to a fourth aspect, this disclosure provides a communication method, including:

determining a $t^{th}$ piece of channel information, where the $t^{th}$ piece of channel information is channel information of a channel between a $t^{th}$ cell node in T cell nodes and a terminal device, T is a positive integer greater than 1, and t is a positive integer from 1 to T;

determining a $t^{th}$ piece of third channel estimation information based on the $t^{th}$ piece of channel information and a model, where the $t^{th}$ piece of third channel estimation information corresponds to the channel between the $t^{th}$ cell node and the terminal device, an input of the model is determined based on the channel information of the channel between the $t^{th}$ cell node and the terminal device, and an output corresponding to the input includes the $t^{th}$ piece of third channel estimation information; and

sending the $t^{th}$ piece of third channel estimation information, where the $t^{th}$ piece of third channel estimation information is for positioning the terminal device. Optionally, values of T and M may be the same, or may be different. This is not limited.

In a possible design, the $t^{th}$ piece of third channel estimation information indicates one or more of the following parameters: an LOS length distance between the $t^{th}$ cell node and the terminal device, a signal transmission latency or a channel transmission latency difference that meets LOS transmission between the $t^{th}$ cell node and the terminal device, a signal angle of departure or a signal angle of arrival that meets LOS transmission and that corresponds to the $t^{th}$ cell node, signal quality that meets LOS transmission between the $t^{th}$ cell node and the terminal device, a type of an actual signal transmission path between the $t^{th}$ cell node and the terminal device, or a type of an actual signal transmission path between the $t^{th}$ cell node and the terminal device, where the type is LOS or NLOS.

In this design, a measurement quantity that meets LOS transmission can be obtained using the model, and/or a signal transmission path between the terminal device and a cell node can be identified using the model. During application in a positioning scenario, this can improve positioning accuracy.

In an optional design, when the model is trained, the input of the model is determined based on channel information of a channel between an $m^{th}$ cell node in M cell nodes and the terminal device, and a label corresponding to the input is determined based on second channel estimation information corresponding to the channel between the $m^{th}$ cell node and the terminal device.

The second channel estimation information corresponding to the channel between the $m^{th}$ cell node and the terminal device is determined based on at least one of M pieces of first channel estimation information, and an $m^{th}$ piece of first channel estimation information in the M pieces of first channel estimation information is estimation information of the channel between the $m^{th}$ cell node in the M cell nodes and the terminal device.

According to a fifth aspect, this disclosure provides a communication apparatus. The communication apparatus may be a location management function (location management function, LMF) network element, hereinafter referred to as an LMF for short; may be an apparatus in the LMF; or may be an apparatus that can be used in a matching manner with the LMF. In a design, the communication apparatus may include modules that are in one-to-one correspondence with the method/operations/steps/actions described in the first aspect. The modules may be implemented by a hardware circuit, software, or a combination of the hardware circuit and software. In a design, the communication apparatus may include a processing module and a communication module.

For example:

The communication module is configured to obtain M pieces of first channel estimation information, where an $m^{th}$ piece of first channel estimation information in the M pieces of first channel estimation information is estimation information of a channel between an $m^{th}$ cell node in M cell nodes and a terminal device, M is a positive integer greater than 1, and m is a positive integer from 1 to M.

The processing module is configured to determine M pieces of second channel estimation information based on at least one of the M pieces of first channel estimation information, where an $m^{th}$ piece of second channel estimation information in the M pieces of second channel estimation information corresponds to the channel between the $m^{th}$ cell node and the terminal device.

For a definition of the second channel estimation information, refer to the description in the first aspect. Details are not described herein again in this disclosure.

In a possible design, the communication module is further configured to send K pieces of second channel estimation information to a first device, the K pieces of second channel estimation information are included in the M pieces of second channel estimation information, and K is a positive integer.

In a possible design, the communication module is further configured to obtain training request information from the first device, and the training request information is for requesting the K pieces of second channel estimation information.

In a possible design, the training request information indicates a parameter type indicated by the second channel estimation information.

In a possible design, the communication module is further configured to obtain the $m^{th}$ piece of first channel estimation information from the first device, and the first device is the $m^{th}$ cell node, or the first device is the terminal device.

In a possible design, the processing module is specifically configured to: determine a first location of the terminal device based on the at least one of the M pieces of first channel estimation information; and determine the M pieces of second channel estimation information based on the first location of the terminal device and locations of the M cell nodes.

For a parameter indicated by the first channel estimation information and positioning of the M cell nodes, refer to the descriptions in the first aspect. Details are not described herein again in this disclosure.

According to a sixth aspect, this disclosure provides a communication apparatus. The communication apparatus may be a terminal device or an $m^{th}$ cell node, may be an apparatus in the terminal device or the $m^{th}$ cell node, may be an apparatus that can be used in a matching manner with the terminal device, or may be an apparatus that can be used in a matching manner with the $m^{th}$ cell node. In a design, the communication apparatus may include modules that are in one-to-one correspondence with the method/operations/steps/actions described in the second aspect. The modules may be implemented by a hardware circuit, software, or a combination of the hardware circuit and software. In a design, the communication apparatus may include a processing module and a communication module.

For example:

The processing module is configured to send an $m^{th}$ piece of first channel estimation information via the communication module, where the $m^{th}$ piece of first channel estimation information belongs to M pieces of first channel estimation information, M is a positive integer greater than 1, m is a positive integer from 1 to M, the $m^{th}$ piece of first channel estimation information in the M pieces of first channel estimation information is estimation information of a channel between the $m^{th}$ cell node in M cell nodes and the terminal device, at least one of the M pieces of first channel estimation information is for determining M pieces of second channel estimation information, and an $m^{th}$ piece of second channel estimation information in the M pieces of second channel estimation information corresponds to the channel between the $m^{th}$ cell node and the terminal device.

The communication module is configured to obtain information indicating a model, where when the model is trained, an input of the model is determined based on channel information of the channel between the $m^{th}$ cell node and the terminal device, and a label corresponding to the input is determined based on the second channel estimation information corresponding to the channel between the $m^{th}$ cell node and the terminal device.

In a possible design, the processing module is further configured to send the channel information of the channel between the $m^{th}$ cell node and the terminal device via the communication module.

For a parameter indicated by the first channel estimation information and positioning of the M cell nodes, refer to the descriptions in the first aspect. Details are not described herein again in this disclosure.

According to a seventh aspect, this disclosure provides a communication apparatus. The communication apparatus may be a model training node, for example, a terminal device, an $m^{th}$ cell node, or an artificial intelligence (artificial Intelligence, AI) network element, may be an apparatus in the model training node, or may be an apparatus that can be used in a matching manner with the model training node. In a design, the communication apparatus may include modules that are in one-to-one correspondence with the method/operations/steps/actions described in the third aspect. The modules may be implemented by a hardware circuit, software, or a combination of the hardware circuit and software. In a design, the communication apparatus may include a processing module and a communication module.

For example:

The processing module is configured to determine K pieces of channel information, where a $k^{th}$ piece of channel information in the K pieces of channel information is channel information of a channel between a $k^{th}$ cell node in K cell nodes and the terminal device, K is a positive integer, and k is a positive integer from 1 to K.

The communication module is configured to obtain K pieces of second channel estimation information, where a $k^{th}$ piece of second channel estimation information in the K pieces of second channel estimation information corresponds to the channel between the $k^{th}$ cell node and the terminal device, the K pieces of second channel estimation information are determined based on at least one of M pieces of first channel estimation information, an $m^{th}$ piece of first channel estimation information in the M pieces of first channel estimation information is estimation information of a channel between the $m^{th}$ cell node in M cells and the terminal device, the K cells are included in the M cells, M is a positive integer greater than 1, and m is a positive integer from 1 to M.

The processing module is further configured to train a model based on the K pieces of second channel estimation information, where when the model is trained, an input of the model is determined based on the channel information of the channel between the $k^{th}$ cell node and the terminal device, and a label corresponding to the input is determined based on the second channel estimation information corresponding to the channel between the $k^{th}$ cell node and the terminal device.

In a possible design, the communication module is further configured to send training request information, where the training request information is for requesting the K pieces of second channel estimation information.

In a possible design, the training request information indicates a parameter type indicated by the second channel estimation information.

In a possible design, the communication module is further configured to send the first channel estimation information of the channel between the $m^{th}$ cell node and the terminal device.

For a parameter indicated by the first channel estimation information and positioning of the M cell nodes, refer to the descriptions in the first aspect. Details are not described herein again in this disclosure.

According to an eighth aspect, this disclosure provides a communication apparatus. The communication apparatus may be a terminal device or a $t^{th}$ cell node, may be an apparatus in the terminal device or the $t^{th}$ cell node, may be an apparatus that can be used in a matching manner with the terminal device, or may be an apparatus that can be used in a matching manner with the $t^{th}$ cell node. In a design, the communication apparatus may include modules that are in one-to-one correspondence with the method/operations/steps/actions described in the fourth aspect. The modules may be implemented by a hardware circuit, software, or a combination of the hardware circuit and software. In a design, the communication apparatus may include a processing module and a communication module.

For example:

The processing module is configured to determine a $t^{th}$ piece of channel information, where the $t^{th}$ piece of channel information is channel information of a channel between the $t^{th}$ cell node in T cell nodes and the terminal device, T is a positive integer greater than 1, and m is a positive integer from 1 to T.

The processing module is further configured to determine a $t^{th}$ piece of third channel estimation information based on the $t^{th}$ piece of channel information and a model, the $t^{th}$ piece of third channel estimation information corresponds to the channel between the $t^{th}$ cell node and the terminal device, an input of the model is determined based on the channel information of the channel between the $t^{th}$ cell node and the terminal device, and an output corresponding to the input includes the $t^{th}$ piece of third channel estimation information.

The communication module is configured to send the $t^{th}$ piece of third channel estimation information, where the $t^{th}$ piece of third channel estimation information is for positioning the terminal device. Optionally, values of T and M may be the same, or may be different. This is not limited.

In a possible design, the communication module is further configured to obtain information indicating the model.

For definitions of the third channel estimation information and the model, refer to the descriptions in the fourth aspect. Details are not described herein again in this disclosure.

According to a ninth aspect, this disclosure provides a communication apparatus. The communication apparatus includes a processor, configured to implement the method described in the first aspect. The processor is coupled to a memory. The memory is configured to store instructions and data. When the processor executes the instructions stored in the memory, the method described in the first aspect can be implemented. Optionally, the communication apparatus may further include the memory. The communication apparatus may further include a communication interface. The communication interface is used by the apparatus to communicate with another device. For example, the communication interface may be a transceiver, a circuit, a bus, a module, a pin, or a communication interface of another type.

In a possible device, the communication apparatus includes:

a memory, configured to store program instructions; and
a processor, configured to obtain M pieces of first channel estimation information via the communication interface, where an $m^{th}$ piece of first channel estimation information in the M pieces of first channel estimation information is estimation information of a channel between an $m^{th}$ cell node in M cell nodes and a terminal device, M is a positive integer greater than 1, and m is a positive integer from 1 to M; and determine M pieces of second channel estimation information based on at least one of the M pieces of first channel estimation information, where an $m^{th}$ piece of second channel estimation information in the M pieces of second channel estimation information corresponds to the channel between the $m^{th}$ cell node and the terminal device.

According to a tenth aspect, this disclosure provides a communication apparatus. The communication apparatus includes a processor, configured to implement the method described in any one of the second aspect to the fourth aspect. The processor is coupled to a memory. The memory is configured to store instructions and data. When the processor executes the instructions stored in the memory, the method described in any one of the second aspect to the fourth aspect can be implemented. Optionally, the communication apparatus may further include the memory. The communication apparatus may further include a communication interface. The communication interface is used by the apparatus to communicate with another device. For example, the communication interface may be a transceiver, a circuit, a bus, a module, a pin, or a communication interface of another type.

In a first possible device, the communication apparatus includes:

a memory, configured to store program instructions; and
a processor, configured to: send an $m^{th}$ piece of first channel estimation information via the communication interface, where the $m^{th}$ piece of first channel estimation information belongs to M pieces of first channel estimation information, M is a positive integer greater than 1, m is a positive integer from 1 to M, the $m^{th}$ piece of first channel estimation information in the M pieces of first channel estimation information is estimation information of a channel between an $m^{th}$ cell node in M cell nodes and a terminal device, at least one of the M pieces of first channel estimation information is for determining M pieces of second channel estimation information, and an $m^{th}$ piece of second channel estimation information in the M pieces of second channel estimation information corresponds to the channel between the $m^{th}$ cell node and the terminal device; and
obtain information indicating a model via the communication interface, where when the model is trained, an input of the model is determined based on channel information of the channel between the $m^{th}$ cell node and the terminal device, and a label corresponding to the input is determined based on the second channel estimation information corresponding to the channel between the $m^{th}$ cell node and the terminal device.

In a second possible device, the communication apparatus includes:

a memory, configured to store program instructions; and
a processor, configured to determine K pieces of channel information, where a $k^{th}$ piece of channel information in the K pieces of channel information is channel information of a channel between a $k^{th}$ cell node in K cell nodes and a terminal device, K is a positive integer, and k is a positive integer from 1 to K.

The processor is further configured to obtain K pieces of second channel estimation information via the communication interface, where a $k^{th}$ piece of second channel estimation information in the K pieces of second channel estimation information corresponds to the channel between the $k^{th}$ cell node and the terminal device, the K pieces of second channel estimation information are determined based on at least one of M pieces of first channel estimation information, an $m^{th}$ piece of first channel estimation information in the M pieces of first channel estimation information is estimation information of a channel between an $m^{th}$ cell node in M cells and the terminal device, the K cells are included in the M cells, M is a positive integer greater than 1, and m is a positive integer from 1 to M.

The processor is further configured to train a model based on the K pieces of second channel estimation information, where when the model is trained, an input of the model is determined based on the channel information of the channel between the $k^{th}$ cell node and the terminal device, and a label corresponding to the input is determined based on the second channel estimation information corresponding to the channel between the $k^{th}$ cell node and the terminal device.

In a third possible device, the communication apparatus includes:

a memory, configured to store program instructions; and
a processor, configured to:

determine a $t^{th}$ piece of channel information, where the $t^{th}$ piece of channel information is channel information of a channel between a $t^{th}$ cell node in T cell nodes and a terminal device, T is a positive integer greater than 1, and t is a positive integer from 1 to T;

determine a $t^{th}$ piece of third channel estimation information based on the $t^{th}$ piece of channel information and a model, where the $t^{th}$ piece of third channel estimation information corresponds to the channel between the $t^{th}$ cell node and the terminal device, an input of the model is determined based on the channel information of the channel between the $t^{th}$ cell node and the terminal device, and an output corresponding to the input includes the $t^{th}$ piece of third channel estimation information; and

send the $t^{th}$ piece of third channel estimation information via the communication interface, where the $t^{th}$ piece of third channel estimation information is for positioning the terminal device.

According to an eleventh aspect, this disclosure provides a communication system, including the communication apparatus described in the fifth aspect or the ninth aspect, and the communication apparatus described in at least one of the sixth aspect, the seventh aspect, and the eighth aspect; or
including the communication apparatus described in the fifth aspect or the ninth aspect, and the communication apparatus described in the tenth aspect.

According to a twelfth aspect, this disclosure further provides a computer program. When the computer program is run on a computer, the computer is enabled to perform the method provided in any one of the first aspect to the fourth aspect.

According to a thirteenth aspect, this disclosure further provides a computer program product, including instructions. When the instructions are run on a computer, the computer is enabled to perform the method provided in any one of the first aspect to the fourth aspect.

According to a fourteenth aspect, this disclosure further provides a computer-readable storage medium. The computer-readable storage medium stores a computer program or instructions. When the computer program or the instructions are run on a computer, the computer is enabled to perform the method provided in any one of the first aspect to the fourth aspect.

According to a fifteenth aspect, this disclosure further provides a chip. The chip is configured to read a computer program stored in a memory, to perform the method provided in any one of the first aspect to the fourth aspect.

According to a sixteenth aspect, this disclosure further provides a chip system. The chip system includes a processor, configured to support a computer apparatus in implementing the method provided in any one of the first aspect to the fourth aspect. In a possible design, the chip system further includes a memory, and the memory is configured to store a program and data that are necessary for the computer apparatus. The chip system may include a chip, or may include a chip and another discrete component.

**BRIEF DESCRIPTION OF DRAWINGS**

FIG. 1A is a diagram of a structure of a communication system according to this disclosure;
FIG. 1B is a diagram of a structure of a communication system according to this disclosure;
FIG. 1C is a diagram of a structure of a communication system according to this disclosure;
FIG. 2 is a principle diagram of a TDOA-based positioning method;
FIG. 3 is a diagram of a time-domain channel response;
FIG. 4 is a diagram of a structure of a signal transmission path;
FIG. 5 is a diagram of a structure of a communication system according to this disclosure;
FIG. 6A is a diagram of a neuron structure;
FIG. 6B is a diagram of a layer relationship of a neural network;
FIG. 7 is a diagram of a model training framework according to this disclosure;
FIG. 8 is a schematic flowchart of a communication method according to this disclosure;
FIG. 9 is a diagram of a location distribution;
FIG. 10 is a schematic flowchart of a model-based positioning method according to this disclosure;
FIG. 11 is a schematic flowchart of a communication method according to this disclosure;
FIG. 12 is a schematic flowchart of a communication method according to this disclosure;
FIG. 13 is a diagram of a structure of a communication apparatus according to this disclosure; and
FIG. 14 is a diagram of a structure of a communication apparatus according to this disclosure.

**DESCRIPTION OF EMBODIMENTS**

To make the objectives, technical solutions, and advantages of this disclosure clearer, the following further describes this disclosure in detail with reference to the accompanying drawings.

In this disclosure, the following term "at least one piece (item)" means one piece (item) or more pieces (items). The term "a plurality of pieces (items)" means two pieces (items) or more pieces (items). The term "and/or" describes an association relationship between associated objects, and indicates that three relationships may exist. For example, A and/or B may indicate the following three cases: Only A exists, both A and B exist, and only B exists. The character "/" generally indicates an "or" relationship between the associated objects. In addition, it should be understood that although terms such as "first" and "second" may be used in this disclosure to describe objects, these objects should not be limited by these terms. These terms are merely used to distinguish the objects from each other.

The following terms "including", "having", and any other variant thereof mentioned in descriptions of this disclosure are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in this disclosure, the terms such as "example" or "for example" indicate giving an example, an illustration, or a description. Any method or design scheme described as an "example" or "for example" in this disclosure should not be explained as being more preferred or having more advantages than another method or design scheme. To be precise, use of the term "example", "for example", or the like is intended to present a related concept in a specific manner.

Technologies provided in this disclosure are applicable to various communication systems. For example, the communication system may be a 3rd generation (3rd generation, 3G) communication system (for example, a universal mobile telecommunications system (universal mobile telecommunications system, UMTS)), a 4th generation (4th generation, 4G) communication system (for example, a long term evolution (long term evolution, LTE) system), a 5th generation (5th generation, 5G) communication system, a worldwide interoperability for microwave access (worldwide interoperability for microwave access, WiMAX) or wireless local area network (wireless local area network, WLAN) system, a system integrating a plurality of systems, or a future communication system, for example, a 6th generation (6th generation, 6G) communication system. The 5G communication system may also be referred to as a new radio (new radio, NR) system. A network element in the communication system may send a signal to or receive a signal from another network element. The signal may include information, signaling, data, or the like. The network element may alternatively be replaced with an entity, a network entity, a device, a communication device, a communication module, a node, a communication node, or the like. In this disclosure, the network element is used as an example for description.

For example, the communication system may include at least one terminal device and at least one access network device. The access network device may send a downlink signal to the terminal device, and/or the terminal device may send an uplink signal to the access network device. In addition, it may be understood that if the communication system includes a plurality of terminal devices, the plurality of terminal devices may further send signals to each other, that is, both a signal sending network element and a signal receiving network element may be terminal devices.

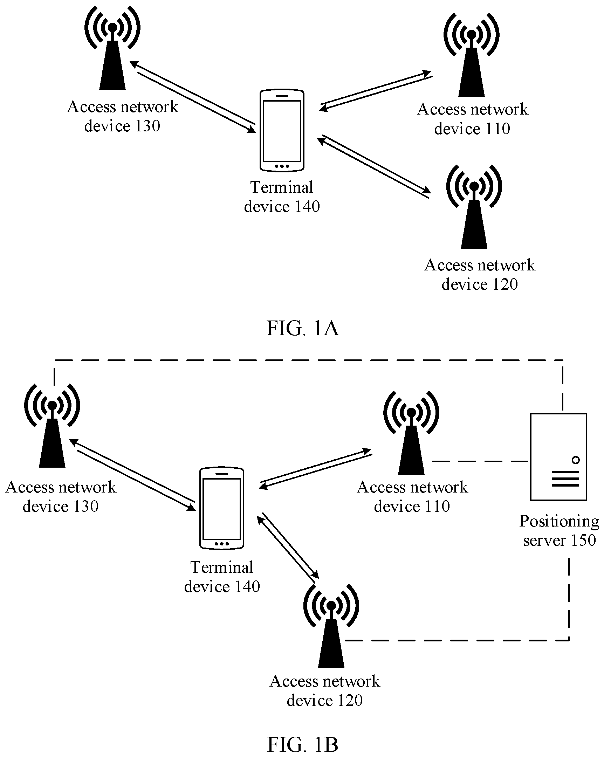

FIG. 1A shows a communication system 100. For example, the communication system 100 includes an access network device 110, an access network device 120, an access network device 130, and a terminal device 140. The terminal device 140 may send an uplink signal to one or more of the access network device 110, the access network device 120, and the access network device 130. The one or more of the access network device 110, the access network device 120, and the access network device 130 may send a downlink signal to the terminal device 140.

The following describes in detail the terminal device and the access network device in FIG. 1A.

(1) Access network device

The access network device may be a base station (base station, BS). The access network device may also be referred to as a network device, an access node (access node, AN), or a radio access node (radio access node, RAN). The base station may be in a plurality of forms, such as a macro base station, a micro base station, a relay station, or an access point. The access network device may be connected to a core network (for example, an LTE core network or a 5G core network), and the access network device may provide a wireless access service for a terminal device. For example, the access network device includes but is not limited to at least one of the following: a base station in 5G, such as a transmission reception point (Transmission Reception Point, TRP) or a next-generation NodeB (generation NodeB, gNB), an access network device in an open radio access network (open radio access network, O-RAN) or a module included in the access network device, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission reception point (transmission reception point, TRP), a transmission point (transmission point, TP), and/or a mobile switching center. Alternatively, the access network device may be a radio unit (radio unit, RU), a central unit (central unit, CU), a distributed unit (distributed unit, DU), a central unit control plane (CU control plane, CU-CP) node, or a central unit user plane (CU user plane, CU-UP) node. Alternatively, the access network device may be a vehicle-mounted device, a wearable device, an access network device in a future evolved public land mobile network (public land mobile network, PLMN), or the like.

In this disclosure, a communication apparatus configured to implement functions of the access network device may be an access network device, may be a network device having some functions of the access network device, or may be an apparatus that supports the access network device in implementing these functions, for example, a chip system, a hardware circuit, a software module, or a hardware circuit plus a software module. The apparatus may be installed in the access network device or used in a matching manner with the access network device. A method in this disclosure is described by using an example in which the communication apparatus configured to implement the functions of the access network device is the access network device.

(2) Terminal device

The terminal device is also referred to as a terminal, user equipment (user equipment, UE), a mobile station (mobile station, MS), a mobile terminal (mobile terminal, MT), or the like. The terminal device may be a device that provides voice and/or data connectivity for a user. The terminal device may communicate with one or more core networks via an access network device. The terminal device may be deployed on land, including an indoor device, an outdoor device, a handheld device, and/or a vehicle-mounted device, may be deployed on a water surface (for example, on a ship), or may be deployed in air (for example, on an airplane, a balloon, or a satellite). The terminal device includes a handheld device with a wireless connection function, another processing device connected to a wireless modem, a vehicle-mounted device, or the like. Alternatively, the terminal device may be a portable, pocket-sized, handheld, computer built-in, or vehicle-mounted mobile apparatus. Examples of some terminal devices are: a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a wireless network camera, a mobile phone (mobile phone), a tablet computer, a laptop computer, a palmtop computer, a mobile internet device (mobile internet device, MID), a wearable device, for example, a smart watch, a virtual reality (virtual reality, VR) device, an augmented reality (augmented reality, AR) device, a wireless terminal in industrial control (industrial control), a terminal in an internet of vehicles system, a wireless terminal in self driving (self driving), a wireless terminal in a smart grid (smart grid), a wireless terminal in a transportation safety (transportation safety), a wireless terminal in a smart city (smart city), for example, a smart refueler, a terminal device on a high-speed train, and a wireless terminal in a smart home (smart home), for example, a smart speaker, a smart coffee machine, and a smart printer.

In this disclosure, a communication apparatus configured to implement functions of the terminal device may be a terminal device, may be a terminal device having some functions of the terminal, or may be an apparatus that supports the terminal device in implementing these functions, for example, a chip system. The apparatus may be installed in the terminal device or used in a matching manner with the terminal device. In this disclosure, the chip system may include a chip, or may include a chip and another discrete component. The technical solutions provided in this disclosure are described by using an example in which the communication apparatus configured to implement the functions of the terminal device is the terminal device or the UE.

It should be understood that a quantity and types of devices in the communication system shown in FIG. 1A are merely used as examples, and this disclosure is not limited thereto. During actual application, the communication system may further include more terminal devices and more access network devices, and may further include another network element, for example, may include a core network element and/or a network element configured to implement an artificial intelligence function.

The method provided in this disclosure relates to positioning technologies for terminal devices. Refer to FIG. 1B. A positioning server 150 is introduced in the communication system shown in FIG. 1A, and the positioning server 150 is configured to estimate a location of a terminal device. In a scenario in which the terminal device is positioned, the positioning server may detect a feature parameter between the terminal device and an access network device at a fixed location (that is, a known location), and obtain information about a relative location or angle between the terminal device and the access network device, to estimate a location of the terminal device. For example, some feature parameters include one or more of the following: signal quality, a distance, a signal transmission latency (or referred to as a signal propagation time), a signal transmission latency difference, a signal angle of departure, a signal angle of arrival, or the like. The signal quality may be reflected by one or more indicators of a signal-to-noise ratio, signal strength, signal field strength, signal energy, signal receive power, or the like.

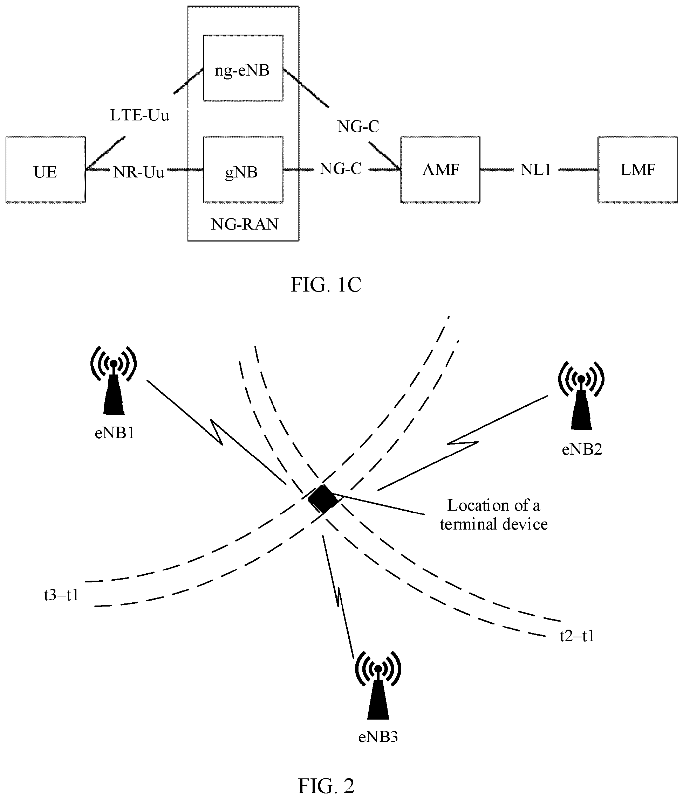

Specifically, the positioning server in FIG. 1B may be implemented by a location management function (location management function, LMF) network element. Refer to a communication system shown in FIG. 1C. The communication system includes access network devices, a terminal device, and a core network element, for example, an access and mobility management function (access and mobility management function, AMF) network element and a location management function (location management function, LMF) network element. In the communication system shown in FIG. 1C, the access network devices may be base stations in a same standard, or may be base stations in different network standards. For example, FIG. 1C shows a 5G base station, for example, a gNB, and a 4G base station, for example, an ng-eNB, that can access a 5G core network. The terminal device (indicated by UE in FIG. 1C) and the gNB may communicate with each other through an NR-Uu interface, for example, transmit positioning-related signaling through the NR-Uu interface. The terminal device and the ng-eNB communicate with each other through an LTE-Uu interface, for example, transmit positioning-related signaling through the LTE-Uu interface. The gNB and the AMF communicate with each other through an NG-C interface, and the ng-eNB and the AMF communicate with each other through an NG-C interface. For example, the NG-C interface may be configured to transmit positioning-related signaling. The AMF and the LMF communicate with each other through an NL1 interface, for example, positioning-related signaling is transmitted through the NL1 interface.

Specifically, one of the terminal device or the access network device sends a reference signal, and the other measures the reference signal to obtain channel information, and may determine a feature parameter between the terminal device and the access network device based on the channel information. The feature parameter may also be referred to as a measurement quantity, and then the measurement quantity is reported to the LMF. For example, in a downlink positioning scenario, the access network device sends, to the terminal device or in a cell to the terminal device, a positioning reference signal (positioning reference signal, PRS). The terminal device measures the PRS to obtain downlink channel information, so that the terminal device determines a measurement quantity based on the downlink channel information, and reports the measurement quantity to the LMF for positioning the terminal device. For example, in an uplink positioning scenario, the terminal device may send, to the access network device or in a cell to the access network device, a sounding reference signal (sounding reference signal, SRS). The access network device measures the SRS to obtain uplink channel information, so that the access network device determines a measurement quantity based on the uplink channel information, and reports the measurement quantity to the LMF for positioning the terminal device.

The following describes examples of some positioning methods.

In a positioning method based on a time difference of arrival (time difference of arrival, TDOA), a terminal device may be positioned based on locations of at least three synchronized access network devices. As shown in FIG. 2, three access network devices are respectively denoted as eNB1, eNB2, and eNB3. Distances between the three access network devices and a terminal device are respectively d1, d2, and d3, and propagation time of corresponding signals is respectively 11, t2, and t3. For example, the three access network devices respectively send PRSs, respectively denoted as P1, P2, and P3, to the terminal device. eNB1 may be set as a reference node, and the terminal device may measure a time difference of arrival between P2 and P1, that is $t_2 - t_1$, also referred to as a reference signal time difference (reference signal time difference, RSTD). The terminal device may infer $d_2 - d_1$ based on $t_2 - t_1$, and obtains a curve on which each point satisfies that a difference between a distance from the terminal device to eNB2 and a distance from the terminal device to eNB1 is $d_2 - d_1$. Similarly, the terminal device may measure a time difference of arrival between P3 and P1, that is $t_3 - t_1$, may infer $d_3 - d_1$ based on $t_3 - t_1$, and obtains another curve on which each point satisfies that a difference between a distance from the terminal device to eNB3 and a distance from the terminal device to eNB1 is $d_3 - d_1$. The terminal device may determine a location of the terminal device based on an intersection of the two curves. Alternatively, the terminal device may report, to the LMF, at least one parameter of signal propagation time, a time difference of arrival, distances, or an inferred distance difference between different access network devices and the terminal device, and the LMF may determine the two curves and an intersection of the two curves, to determine the location of the terminal device. In addition, because a synchronization error exists between different access network devices, a corresponding obtained time difference of arrival may be indicated by a range. For example, a corresponding range shown in FIG. 2 in which a curve is located is indicated by dashed lines, and it is determined that the location of the terminal device is located in an overlapping part between ranges in which the two curves are located.

Specifically, the location of the terminal device may be calculated according to the following formula:

$$\begin{cases} \sqrt{(x_2 - x)^2 + (y_2 - y)^2} - \sqrt{(x_1 - x)^2 + (y_1 - y)^2} = d_2 - d_1 = c \times (t_2 - t_1) \\ \sqrt{(x_3 - x)^2 + (y_3 - y)^2} - \sqrt{(x_1 - x)^2 + (y_1 - y)^2} = d_3 - d_1 = c \times (t_3 - t_1) \end{cases}$$

$(x_i, y_i)$ indicates location coordinates of eNB$i$, and a value of $i$ is 1, 2, or 3; and $(x, y)$ indicates location coordinates of the terminal device to be obtained, and $c$ indicates a light speed.

In the TDOA-based positioning method, the access network device sends the PRS to the terminal device to perform positioning. This positioning method may also be referred to as downlink-TODA (downlink-TODA, DL-TDOA) or observed time difference of arrival (observed time difference of arrival, OTDOA). Similarly, if the TDOA-based positioning method is a positioning method in which the terminal device sends an SRS to the access network device, this positioning method may also be referred to as an uplink-TODA (uplink-TODA, UL-TDOA).

In a positioning method based on a signal angle of arrival (angle of arrival, AoA) or a signal angle of departure (angle of departure, AoD), a terminal device may be positioned based on locations of at least two synchronized access network devices. A signal herein is a signal transmitted between the access network device and the terminal device, and both AoA and AoD are angles relative to the access network device. In other words, in a scenario in which the access network device sends a PRS to the terminal device to perform positioning, the at least two access network devices may send PRSs to the terminal device, and the terminal device measures the PRSs sent by the different access network devices to determine AoDs corresponding to the access network devices, or determines angle differences between the AoDs corresponding to the access network devices and an AoD reference value. Optionally, the AoD reference value may be an AoD corresponding to one of the at least two access network devices, or a preset AoD. The terminal device reports the AoDs or the angle differences corresponding to the at least two access network devices to the LMF, and the LMF may determine a location of the terminal device based on the AoDs or the angle differences corresponding to the at least two access network devices. In a scenario in which the terminal device sends an SRS to the access network device to perform positioning, the terminal device may send the SRS to the at least two access network devices, and different access network devices measure the SRS from the terminal device to determine AoAs corresponding to the access network devices, or determine angle differences between the AoAs corresponding to the access network devices and an AoA reference value. Optionally, the AoA reference value may be an AoA corresponding to one of the at least two access network devices, or a preset AoA. The access network devices report the AoAs or the angle differences corresponding to the access network devices to the LMF, and the LMF may determine a location of the terminal device based on the AoAs or the angle differences corresponding to the at least two access network devices.

When the positioning method is implemented, the LMF may exchange positioning configuration information with the terminal device or the access network devices in advance, to determine a to-be-positioned terminal device, the access network devices participating in positioning of the terminal device, and a positioning technology-related configuration. As an example, the positioning technology-related configuration may indicate the positioning method used for positioning the terminal device, whether a measured reference signal is a PRS corresponding to downlink positioning or an SRS corresponding to uplink positioning, a measurement quantity for positioning, and/or the like. The following uses the DL-TDOA method as an example to describe a positioning procedure that is based on an LTE positioning protocol (LTE positioning protocol, LPP) and that may be used in a 5G system. The LPP specifies a procedure of information exchange between the terminal device and the LMF, that is, the terminal device and the LMF may exchange information based on an LPP message. It should be noted that in a terminal device-access network device-AMF-LMF connection manner, an LPP message may be transparently transmitted over the access network device and the AMF, to implement exchange between the terminal device and the LMF.

First, the terminal device and the LMF exchange positioning configuration information. The positioning configuration information includes a positioning capability and positioning assistance information. This process may be triggered by the LMF or the terminal device. For example, when the LMF triggers transmission of the positioning assistance information, the LMF determines the positioning assistance information that needs to be provided for the terminal device, and sends an LPP provide assistance data (LPP Provide Assistance Data) message to the terminal device. For another example, when the terminal device triggers transmission of the positioning assistance information, the terminal device first determines the needed positioning assistance information, and sends an LPP request assistance data (LPP Request Assistance Data) message to the LMF. The LPP request assistance data message may indicate the positioning assistance information needed by the terminal device. The LMF sends the LPP provide assistance data message to the terminal device, to provide the positioning assistance information needed by the terminal device. The positioning capability indicates at least one of the following content of the terminal device: information such as a supported positioning method, a used protocol and procedure, and a configurable parameter. The positioning assistance information includes one or more of the following parameters: an identity (identity, ID) of a physical cell in which the terminal device is located, an ID of a global cell, an ID of the access network device, a PRS configuration of the access network device, synchronization signal block (synchronization signal/physical broadcast channel block, SSB) information of the access network device, spatial direction information of the PRS, geographic location coordinates of the access network device, and a time difference between the access network device and a reference node, and other information.

Secondly, the terminal device and the LMF exchange positioning information. To be specific, a measurement quantity (or referred to as a positioning measurement result) determined by the terminal device by measuring PRSs sent by the access network devices is fed back to the LMF. This process may be triggered by the terminal device or the LMF. For example, when the LMF triggers the positioning information exchange, the LMF sends an LPP request positioning information (LPP Request Location Information) message to the terminal device. The LPP request positioning information message indicates information such as the positioning measurement result, measurement configuration information, and/or required response time that are needed by the LMF. Then, the terminal device sends an LPP provide location information (LPP Provide Location Information) message to the LMF before the required response time, to feed back a measurement quantity. When the terminal device triggers the positioning information exchange, the terminal device sends an LPP provide positioning information message to the LMF, to feed back a measurement quantity. The measurement quantity may include one or more pieces of information such as a time stamp of arrival of a PRS, propagation time of the PRS, a time difference of arrival corresponding to the PRS, or signal receive power of the PRS. In addition, the measurement quantity may further include information for identifying the access network device, for example, include an ID of a physical cell, an ID of a global cell, and/or an ID of the access network device corresponding to the measurement quantity.

In addition to the positioning assistance information and the positioning information that need to be exchanged between the terminal device and the LMF, some positioning assistance information may further be exchanged between the access network device and the LMF. The LMF usually triggers the exchange of the positioning assistance information between the access network device and the LMF. For a related procedure, refer to, but not limited to, a provision in the NR positioning protocol A (NR positioning protocol A, NRPPa). The access network device and the LMF are connected via the AMF. The NRPPa is transparent to the AMF. The NRPPa data unit performs transparent transmission over the AMF, so that the access network device and the LMF implement the exchange. The positioning assistance information of the access network device includes one or more parameters such as an ID of a physical cell, an ID of a global cell, an ID of the access network device, a PRS configuration of the access network device, SSB information of the access network device, spatial direction information of the PRS, or geographic location coordinates of the access network device. The LMF sends a TRP information request (TRP Information Request) message to the access network device. The TRP information request message is for requesting the positioning assistance information of the access network device needed by the LMF. The access network device sends a TRP information response (TRP Information Response) message to the LMF. The TRP information response message indicates the positioning assistance information of the access network device needed by the LMF. Alternatively, the access network device sends a TRP information failure (TRP Information Failure) message to the LMF. The TRP information failure message indicates a failure cause.

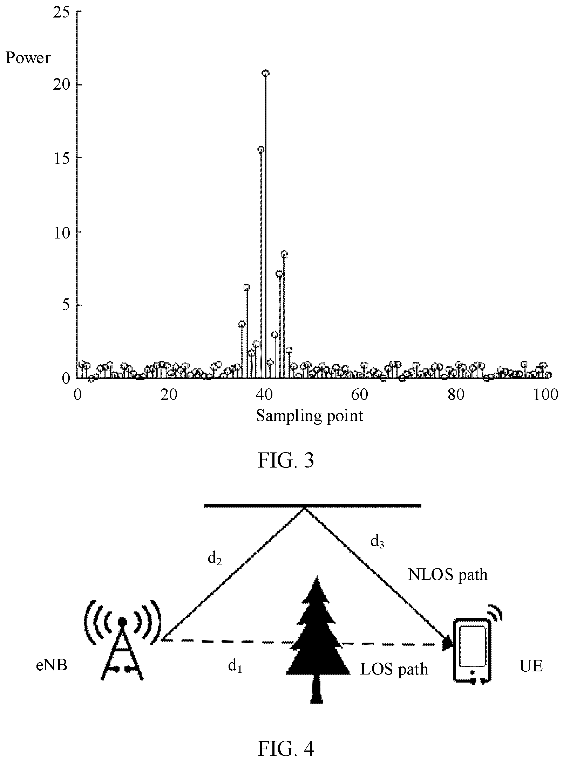

In an actual scenario, due to impact of noise and interference, signal propagation time or a related angle determined by measuring a reference signal may have a specific measurement error, and a corresponding positioning result may also have a specific error. For example, FIG. 3 shows power $|h(t)|^2$ at different time domain sampling points of a time-domain channel response obtained by measuring a reference signal. As shown in FIG. 3, signal power of time domain sampling points in a start segment is weaker, and corresponds to a noise signal; and signal power of time domain sampling points in an intermediate segment is stronger, and corresponds to a multipath response of an actual signal. In other words, in an actual scenario, a start location of the actual signal needs to be determined in an environment with interference and noise, to obtain accurate signal propagation time or related angles. Determining the start location of the actual signal is also referred to as a first path identification problem. In addition, if the measured reference signal is a signal propagated on a non-line-of-sight (non-line of sight, NLOS) path, a large estimation error is caused for positioning of a terminal device. Therefore, it is generally required that the measured reference signal is a signal propagated on a line-of-sight (line of sight, LOS) path. An NLOS path between an access network device and the terminal device indicates that an obstacle exists between the access network device and the terminal device, so that a signal cannot be directly propagated. An LOS path between the access network device and the terminal device indicates that a signal between the access network device and the terminal device is directly propagated. As shown in FIG. 4, an LOS path (dotted line) between an eNB and UE is blocked by a tree, and an actual path of arrival is an NLOS path (solid line) reflected by a wall. An NLOS distance ($d_2 + d_3$) is greater than an LOS distance ($d_1$). If the NLOS path is mistakenly considered as the LOS path when a terminal device is positioned, a large measurement error may occur. It can be learned that a classification of LOS and NLOS paths is very important for positioning the terminal device.

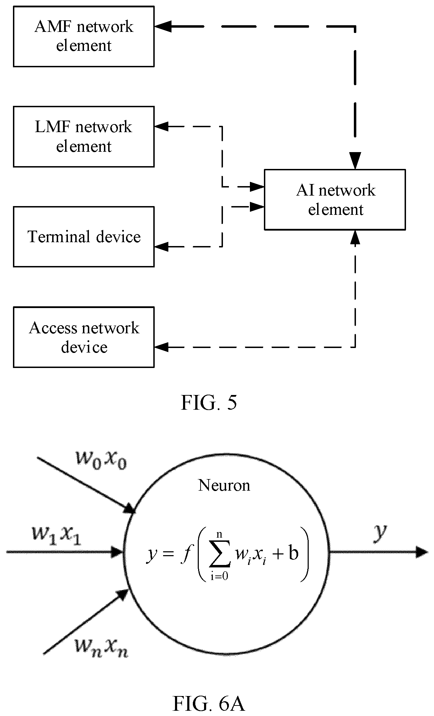

In view of this, in this disclosure, a first path is identified by using an artificial intelligence (artificial Intelligence, AI) technology, and a measurement quantity meeting LOS propagation is inferred based on obtained channel information, to reduce a measurement error and improve positioning accuracy. AI may be implemented by using various possible technologies, for example, by using a machine learning (machine learning, ML) technology. In this disclosure, the communication system may further include a network element implementing an AI function. For example, an AI function (for example, an AI module or an AI entity) may be configured in an existing network element in the communication system to implement an AI-related operation. For example, in a 5G new radio (new radio, NR) system, the existing network element may be an access network device (for example, a gNB), a terminal device, a core network device, a network management system, or the like. Alternatively, an independent network element may be introduced in the communication system to perform an AI-related operation. The independent network element may be referred to as an AI network element, an AI node, or the like. This name is not limited in this disclosure. In this case, a network element performing the AI-related operation is a network element with a built-in AI function (for example, an AI module or an AI entity). The AI-related operation may also be referred to as an AI function. For details about the AI function, refer to the following description. The AI network element may establish a communication connection to a network element included in the communication system, for example, a terminal device, an access network device, or a core network element. For example, refer to FIG. 5. A communication system includes a terminal device, an access network device, an AMF network element, and an LMF network element. An AI network element may be introduced to establish a direct or indirect communication connection to the terminal device, the access network device, the AMF network element, and the LMF network element.

For ease of understanding, the following first describes some terms of AI in this disclosure with reference to A1 to A4. It may be understood that the descriptions are not intended to limit this disclosure.

A1: AI model

The AI model is an implementation of an AI function, indicates a mapping relationship between an input and an output of the model, and may indicate a function model that maps the input in a dimension to the output in a dimension. The AI model may be a neural network model or another machine learning model, for example, a decision tree or a support vector machine. In this disclosure, the AI model may be referred to as a model for short. In this disclosure, the AI function may include at least one of the following: data collection (collecting training data and/or inference data), data preprocessing, model training (or referred to as model learning), model detection, model information release (configuring model information), model inference, or inference result release. The inference may also be referred to as prediction. The model detection may be for detecting whether a model obtained through training meets a requirement. In this disclosure, the AI model may be referred to as a model for short.

A2: Machine learning

The machine learning is an important technical way to implement artificial intelligence. For example, the machine learning can learn a model or rules from raw data. The machine learning is classified into supervised learning, unsupervised learning, and reinforcement learning.

In terms of the supervised learning, a mapping relationship between samples and sample labels is learned based on the collected samples (or referred to as sample values) and the sample labels according to a machine learning algorithm, and the learned mapping relationship is expressed using a machine learning model. A process of training a machine learning model is a process of learning the mapping relationship. For example, in signal detection, a sample is a received signal including noise, and a sample label is a real constellation point corresponding to the received signal. The machine learning expects to learn a mapping relationship between samples and sample labels through training. During training, a model parameter is optimized by calculating an error between an output (that is, a predicted value) of the model and a sample label. After the mapping relationship is learned, a sample label of a new sample may be predicted based on the learned mapping relationship. The mapping relationship learned through supervised learning may include linear mapping and non-linear mapping. Machine learning tasks may be classified into classification tasks and regression tasks based on types of sample labels.

In terms of unsupervised learning, an internal pattern of a sample is autonomously discovered based on the collected sample according to an algorithm. In terms of unsupervised learning, a sample may be used as a supervised signal according to a type of algorithm (for example, an autoencoder and a generative adversarial network). The model learns the mapping relationship from samples to samples. During training, the model parameter is optimized by calculating the error between the predicted value of the model and the sample, to implement self-supervised learning. The self-supervised learning may be used in an application scenario of signal compression and decompression restoration.

The reinforcement learning is a type of algorithm in which a strategy of resolving a problem is learned by exchanging with an environment. Different from the supervised learning and the unsupervised learning, the reinforcement learning does not have a clear sample label. The algorithm needs an exchange with the environment to obtain a reward signal fed back by the environment and adjust a decision action to obtain a larger reward signal value. For example, in downlink power control, a reinforcement learning model adjusts downlink transmit power of each terminal based on a total system throughput fed back by a wireless network, to expect to obtain a higher system throughput. A goal of reinforcement learning is also to learn a mapping relationship between an environment status and an optimal decision action. Reinforcement learning training is implemented through iterative exchange with the environment.

A3: Neural network

The neural network is a specific implementation form of an AI and machine learning technology. According to a universal approximation theorem, the neural network can theoretically approximate to any continuous function, so that the neural network can learn any mapping. In a conventional communication system, rich expertise is required to design a communication module. However, in a neural network-based deep learning communication system, an implicit pattern structure may be automatically discovered from a large quantity of data sets and a mapping relationship between data may be established, to obtain performance better than that of a conventional modeling method.

An idea of the neural network is from a neuron structure of brain tissue. For example, each neuron performs a weighted summation operation on an input value of the neuron, and outputs an operation result based on an activation function. FIG. 6A is a diagram of a neuron structure. It is assumed that inputs of a neuron are $x = [x_0, x_1, \ldots, x_n]$, and weights corresponding to the inputs are respectively $w = [w, w_1, \ldots, w_n]$, where $w_i$ is a weight of $x_i$ and is used to weight $x_i$. An offset for

performing weighted summation on the input values based on the weights is, for example, b. There may be a plurality of forms of the activation function. It is assumed that an activation function of a neuron is y = *f(z)* = max(0, z), and an output of the neuron is $y = f\left(\sum_{i=0}^{i=n} w_i \times x_i + b\right) = \max(0, \sum_{i=0}^{i=n} w_i \times$ $x_i + b)$. For another example, if an activation function of a neuron is y = *f(z)* = z, an output of the neuron is $y = f\left(\sum_{i=0}^{i=n} w_i \times x_i + b\right) = \sum_{i=0}^{i=n} w_i \times x_i + b$. b, $w_i$, or $x_i$ may be any possible value, for example, a decimal, an integer (for example, 0, a positive integer, or a negative integer), or a complex number. Activation functions of different neurons in the neural network may be the same or different.

The neural network generally includes a plurality of layers, and each layer may include one or more neurons. An expression capability, or referred to as a function fitting capability, of the neural network can be improved by increasing a depth and/or a width of the neural network, to provide a more powerful information extraction and abstraction modeling capability for a complex system. The depth of the neural network may be a quantity of layers included in the neural network, and a quantity of neurons included in each layer may be referred to as a width of the layer. In an implementation, the neural network includes an input layer and an output layer. The input layer of the neural network performs neuron processing on received input information, and transfers a processing result to the output layer, and the output layer obtains an output result of the neural network. In another implementation, the neural network includes an input layer, a hidden layer, and an output layer. The input layer of the neural network performs neuron processing on received input information, and transfers a processing result to an intermediate hidden layer. The hidden layer performs calculation on the received processing result to obtain a calculation result. The hidden layer transfers the calculation result to the output layer or an adjacent hidden layer, and finally the output layer obtains an output result of the neural network. One neural network may include one hidden layer, or include a plurality of hidden layers that are sequentially connected. This is not limited.

As described above, each neuron performs a weighted summation operation on an input value of the neuron, and a weighted summation result is output based on a function (for example, the function is usually a non-linear function, but a linear function is not excluded). Weights of the weighted summation operation of neurons in the neural network and the non-linear function are referred to as parameters of the neural network. For example, max{0,x} is a neuron of a non-linear function, a parameter of the neuron that performs a $\max\{0, \sum_{i=0}^{n} w_i \times x_i + b\}$ operation is a weight of w = [w, $w_1, ..., w_n$], and an offset of a weighted summation is b. Parameters of all neurons of a neural network constitute parameters of the neural network.

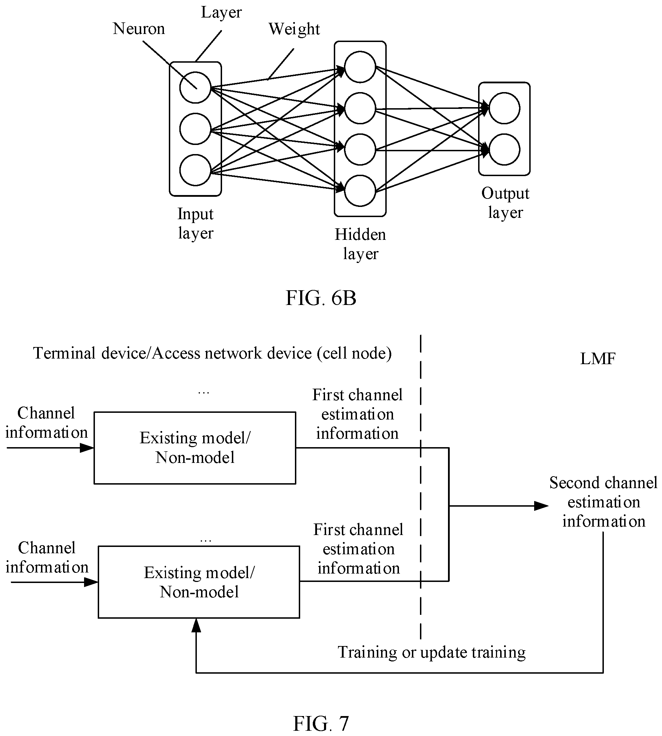

A neural network in this disclosure is, for example, a deep neural network (deep neural network, DNN). The DNN generally has a plurality of hidden layers. In the DNN, a model parameter of the DNN includes a weight corresponding to each neuron. The DNN may optimize the model parameter according to a supervised learning or unsupervised learning strategy. According to a network construction manner, the DNN may include a feedforward neural network (feedforward neural network, FNN), a convolutional neural network (convolutional neural network, CNN), and a recurrent neural network (recurrent neural network, RNN). The FNN is used as an example. FIG. 6B shows a neural network structure. A characteristic of the FNN is that every two neurons at adjacent layers are fully connected.

The CNN is applicable to processing data having a grid-like structure. The data having a grid-like structure may include time series data (timeline discrete sampling), image data (two-dimensional discrete sampling), and the like. A convolution layer of the CNN does not use all input information at a time to perform a convolution operation. Instead, one or more windows of a fixed size are set, and the convolution operation is performed on partial input information captured by using each window. This design can greatly reduce a calculation amount of the model parameter. Specifically, performing the convolution operation on any one of the one or more windows of a fixed size may be understood as performing a multiplication operation and then an addition operation based on a coefficient (for example, a weighting coefficient) of the window and partial input information captured by using the window. After the convolution operation, output information corresponding to the window may be obtained. Coefficients of different windows may be independently configured. For example, different coefficients may be configured for different windows, so that the CNN can better extract features of input data. A coefficient of a window may include a convolution kernel. Optionally, types of partial input information captured by using different windows may be different. For example, a person and an object in a same secondary image may be understood as different types of information. In two windows of a fixed size, one window may capture the person in the image, and the other window may capture the object in the image. The RNN is a DNN network using feedback time series information. An input of the RNN includes a part of a new input value at a current moment and an output value of the RNN at a previous moment. The output value at the previous moment may be determined by an activation function and an input at the previous moment. The RNN is suitable for obtaining a series feature having a time correlation, and is applicable to application scenarios such as speech recognition and channel encoding and decoding.

In addition, in a training process of the neural network, a loss function may be defined. The loss function describes a gap or a difference between an output value of the neural network and an ideal target value, and this disclosure does not limit a specific form of the loss function. The training process of the neural network is a process in which a parameter of the neural network is adjusted, so that a value of the loss function is less than a threshold, or the value of the loss function meets a target requirement. The parameter of the neural network is adjusted. For example, at least one of the following parameters is adjusted: a quantity of layers, a width, a weight of a neuron, or a parameter in an activation function of a neuron of the neural network.

In this disclosure, a model that can be deployed at a measurement quantity reporting side is trained by using an AI technology. This model is configured to extract a measurement quantity from channel information. An input type of the model may include the channel information, and an output type may include information that can represent a measurement quantity. The channel information corresponds to a channel between a terminal device and an access network device (or a cell node of the access network device), and the channel information may be a channel response, a channel eigen matrix, a channel delay distribution, a channel eigenvector, or the like. FIG. 7 shows a model training framework. In an uplink positioning scenario, a measurement quantity reporting side may be an access network device or a cell node of the access network device. In a downlink positioning scenario, a measurement quantity reporting side may be a terminal device. The measurement quantity reporting side first sends first channel estimation information to an LMF. The first channel estimation information indicates a measurement quantity determined by the measurement quantity reporting side by measuring channel information, and the first channel estimation information may also be described as first measurement information. The LMF determines (or referred to as reversely infers) corresponding second channel estimation information based on the obtained first channel estimation information, and the second channel estimation information is for training a model. Optionally, the measurement reporting side may obtain the first channel estimation information from the channel information using an existing model, and the second channel estimation information determined by the LMF is for update training on the existing model.

The following describes in detail a model training solution provided in this disclosure by using a solution 1 to a solution 3.

Solution 1

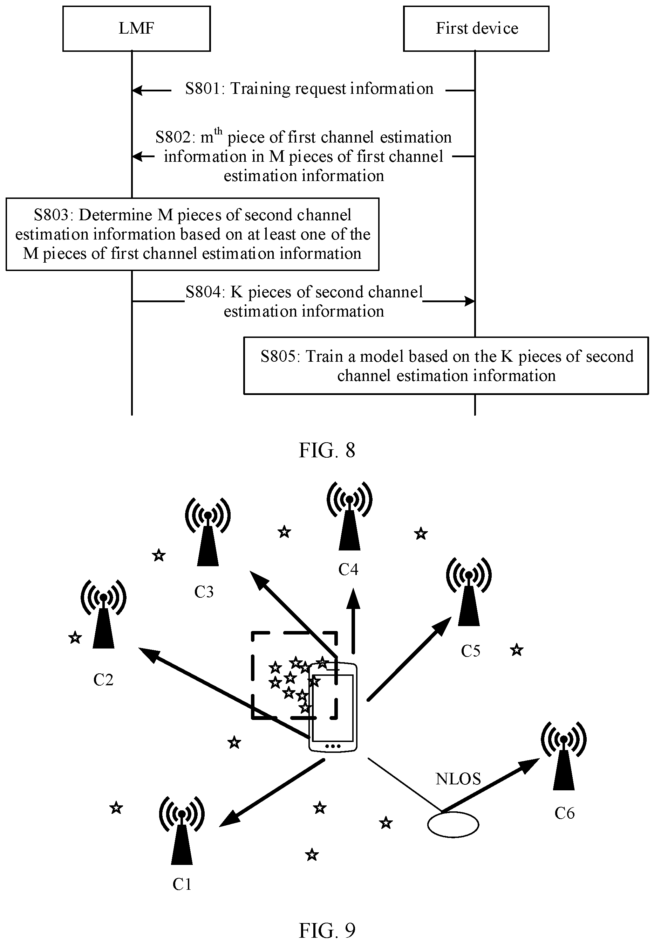

FIG. 8 shows a communication method. The method mainly includes the following procedure.

Optionally, S801: A first device or an LMF initiates a request for training a model.

The model may be deployed in the first device, and is configured to extract, from channel information related to positioning measurement, channel estimation information for positioning a terminal device. The channel estimation information may represent the foregoing described measurement quantity, and is specifically described in S802 below.

Specifically, the first device is the terminal device, or the first device is an $m^{th}$ cell node of M cell nodes. The M cell nodes are cell nodes that participate in model training and position the terminal device. M is a positive integer greater than 1, and m is a positive integer from 1 to M. The M cell nodes may be a same access network device, that is, the access network device may manage a plurality of cells, and may be correspondingly referred to as corresponding cell nodes in different cells. Alternatively, the M cell nodes may be cell nodes of different access network devices, and the M cell nodes may be described as M access network devices. Alternatively, at least two cell nodes of the M cell nodes do not belong to a same access network device. Optionally, the cell node may also be described as a cell. In addition, it should be noted that when an access network device manages only one cell, for example, the access network device is a micro base station or a small cell, the cell node of the access network device may also be understood as the access network device.

In an optional manner, the first device may send training request information to the LMF, to trigger a model training process. For example, when the first device is the cell node, after establishing a basic model architecture, the cell node may send the training request information to request to train a model applicable to a current scenario. For example, when the first device is the terminal device, the terminal device may initiate training when a location changes greatly, for example, entering a shopping mall or arriving at a new city. For example, the terminal device or the cell node may further periodically initiate training to periodically update the model. For example, the terminal device or the cell node may further initiate training when a computing resource is idle.

In another optional manner, the LMF may send the training request information to the first device. Specifically, the LMF may initiate training based on an actual requirement. For example, the LMF initiates model update training when determining that effect of a model currently used by the first device is poor, or the LMF may periodically initiate training to periodically update the model.

The training request information described in the foregoing optional manner may also be referred to as first request information or another name. This is not limited in this disclosure.

For example, FIG. 8 shows in S801 that the first device sends the training request information to the LMF, to trigger the model training process. It may be understood that, when the first device is the terminal device, the terminal device may communicate with the LMF according to the LPP protocol, and an access network device and an AMF related to transparent transmission between the terminal device and the LMF are omitted in FIG. 8; or when the first device is the cell node, an access network device to which the cell node belongs may communicate with the LMF according to the NRPPa protocol, and an AMF related to transparent transmission between the cell node and the LMF is omitted in FIG. 8.

S802: The LMF obtains M pieces of first channel estimation information.

An $m^{th}$ piece of first channel estimation information in the M pieces of first channel estimation information is estimation information of a channel between the $m^{th}$ cell node in the M cell nodes and the terminal device. Specifically, the $m^{th}$ piece of first channel estimation information in the M pieces of first channel estimation information is determined by channel information of the channel between the $m^{th}$ cell node in the M cell nodes and the terminal device.

Specifically, as shown in FIG. 8, the LMF may obtain the $m^{th}$ piece of first channel estimation information from the first device. For example, in a downlink positioning scenario, the M cell nodes may send reference signals, for example, PRSs, to the terminal device. The terminal device measures a PRS sent by the $m^{th}$ cell node in the M cell nodes, to obtain the channel information of the channel between the $m^{th}$ cell node and the terminal device. The terminal device determines, based on the obtained channel information, a measurement quantity corresponding to the $m^{th}$ cell node, and the terminal device sends the $m^{th}$ piece of first channel estimation information to the LMF, where the $m^{th}$ piece of first channel estimation information indicates the measurement quantity corresponding to the $m^{th}$ cell node. For example, in an uplink positioning scenario, the terminal device sends a reference signal, for example, an SRS, to the $m^{th}$ cell node in the M cell nodes. The $m^{th}$ cell node measures a PRS sent by the terminal device, to obtain the channel information of the channel between the $m^{th}$ cell node and the terminal device. The $m^{th}$ cell node determines, based on the obtained channel information, a measurement quantity corresponding to the $m^{th}$ cell node, and the $m^{th}$ cell node sends the $m^{th}$ piece of first channel estimation information to the LMF, where the $m^{th}$ piece of first channel estimation information indicates the measurement quantity corresponding to the $m^{th}$ cell node. Optionally, the LMF may configure the first device to periodically measure the reference signal in a training phase, and to stop measurement until the first device receives a training end indication.

Specifically, the $m^{th}$ piece of first channel estimation information may indicate one or more of the following parameters:

(1) a distance between the $m^{th}$ cell node and the terminal device, where, for example, the $m^{th}$ piece of first channel estimation information includes the distance between the $m^{th}$ cell node and the terminal device; or the $m^{th}$ piece of first channel estimation information includes an $m^{th}$ distance difference, the $m^{th}$ distance difference indicates a difference between a reference distance and the distance between the $m^{th}$ cell node and the terminal device, and the reference distance may be preset, or may be a distance between a specified cell node in the M cell nodes and the terminal device;

(2) a signal transmission latency or a signal transmission latency difference between the $m^{th}$ cell node and the terminal device, where, for example, the $m^{th}$ piece of first channel estimation information includes the signal transmission latency between the $m^{th}$ cell node and the terminal device; or the $m^{th}$ piece of first channel estimation information includes an $m^{th}$ signal transmission latency difference (or referred to as a signal transmission time difference), the $m^{th}$ signal transmission latency difference indicates a difference between a reference latency and the signal transmission latency between the $m^{th}$ cell node and the terminal device, and the reference latency may be preset, or may be a signal transmission latency between a specified cell node in the M cell nodes and the terminal device;

(3) a signal angle of departure (AoD) or a signal angle of arrival (AoA) corresponding to the $m^{th}$ cell node, where, for example, in the uplink positioning scenario, the $m^{th}$ piece of first channel estimation information includes the signal angle of arrival corresponding to the $m^{th}$ cell node, or the $m^{th}$ piece of first channel estimation information includes an $m^{th}$ angle difference of arrival, the $m^{th}$ angle difference of arrival indicates a difference between a reference angle of arrival and the signal angle of arrival between the $m^{th}$ cell node and the terminal device, and the reference angle of arrival may be preset, or may be a signal angle of arrival corresponding to one of the M cell nodes; and for another example, in the downlink positioning scenario, the $m^{th}$ piece of first channel estimation information includes the signal angle of departure corresponding to the $m^{th}$ cell node, or the $m^{th}$ piece of first channel estimation information includes an $m^{th}$ angle difference of departure, the $m^{th}$ angle difference of departure indicates a difference between a reference angle of departure and the signal angle of departure between the $m^{th}$ cell node and the terminal device, and the reference angle of departure may be preset, or may be a signal angle of departure corresponding to a specified cell node in the M cell nodes;

(4) signal quality between the $m^{th}$ cell node and the terminal device, where for understanding of a definition of the signal quality, refer to the foregoing content, and details are not described herein again in this disclosure; and

(5) a type of a signal transmission path between the $m^{th}$ cell node and the terminal device, where, for example, the type of the signal transmission path is line-of-sight or non-line-of-sight.

Optionally, before sending the $m^{th}$ piece of first channel estimation information to the LMF, the first device may exchange positioning configuration information with the LMF. Specifically, for implementation, refer to the foregoing manner in which the terminal device and the LMF exchange the positioning configuration information. Details are not described herein again in this disclosure.

Optionally, the first device may measure the channel information for a plurality of times to determine the $m^{th}$ piece of first channel estimation information, and send the $m^{th}$ piece of first channel estimation information to the LMF for a plurality of times. Correspondingly, that the LMF obtains M pieces of first channel estimation information includes: The LMF obtains the M pieces of first channel estimation information for one or more times.

S803: Determine M pieces of second channel estimation information based on at least one of the M pieces of first channel estimation information.

An $m^{th}$ piece of second channel estimation information in the M pieces of second channel estimation information corresponds to a channel between the $m^{th}$ cell node in the M cell nodes and the terminal device.

Specifically, for understanding of a parameter indicated by the $m^{th}$ piece of second channel estimation information, refer to a parameter indicated by the first channel estimation information. For example, the $m^{th}$ piece of second channel estimation information may indicate one or more of the following parameters: the distance between the $m^{th}$ cell node and the terminal device, the signal transmission latency or the signal transmission latency difference between the $m^{th}$ cell node and the terminal device, the signal angle of departure (AoD) or the signal angle of arrival (AoA) corresponding to the $m^{th}$ cell node, the signal quality between the $m^{th}$ cell node and the terminal device, or a type of an actual signal transmission path between the $m^{th}$ cell node and the terminal device.

In addition, it may be understood that, in the parameters that can be indicated by the $m^{th}$ piece of second channel estimation information, except the type of the actual signal transmission path, the other parameters are parameters calculated by correspondingly simulating a case in which the path between the $m^{th}$ cell node and the terminal device is LOS. The type of the actual signal transmission path between the $m^{th}$ cell node and the terminal device may be LOS or NLOS.

Optionally, a parameter type indicated by the $m^{th}$ piece of second channel estimation information may be the same as a parameter type indicated by the $m^{th}$ piece of first channel estimation information. For example, when parameters indicated by the $m^{th}$ piece of first channel estimation information include (1) to (3) described in S802, parameters indicated by the $m^{th}$ piece of second channel estimation information include labels corresponding to (1) to (3) described in S802. Alternatively, a parameter type indicated by the $m^{th}$ piece of second channel estimation information may be different from a parameter type indicated by the $m^{th}$ piece of first channel estimation information. For example, when parameters indicated by the $m^{th}$ piece of first channel estimation information include (1) to (3) described in S802, parameters indicated by the $m^{th}$ piece of second channel estimation information includes labels corresponding to (1) and (2) described in S802. The parameter type indicated by the $m^{th}$ piece of second channel estimation information may be determined based on an actual model training requirement. This is not limited in this disclosure.

In an example, corresponding to S801, when sending the training request information to the LMF, the first device may request related second channel estimation information based on the training request information. Optionally, the first device may specify, for the LMF based on the training request information, a parameter indicated by the second channel estimation information. For example, the first device may include, in the training request information, a parameter type indicated by the second channel estimation information. In this case, the parameter type indicated by the second channel estimation information may also be understood as a type that is of a measurement quantity represented by an output of the model and that is expected by the first device.

Optionally, corresponding to S802 in which the LMF obtains the M pieces of second channel estimation information for one or more times, for each of the one or more times, the LMF may determine the corresponding M pieces of second channel estimation information in the following manner: The LMF determines a first location of the terminal device based on at least one of the M pieces of first channel estimation information, and the LMF determines the M pieces of second channel estimation information based on the first location of the terminal device and locations of the M cell nodes.

The first location may be a trusted location (or referred to as a reliable location) of the terminal device that is preliminarily determined by the LMF with reference to the locations of the M cell nodes and the at least one of the M pieces of first channel estimation information. The following describes an optional implementation of determining the first location.

In an optional implementation, the LMF may determine a plurality of second locations of the terminal device based on the M pieces of first channel estimation information and the locations of the M cell nodes. A first part of locations in the plurality of second locations are located in a first area, a second part of locations in the plurality of second locations are not located in the first area, and a quantity of locations of the first part is greater than a quantity of locations of the second part. Further, the LMF determines the first location of the terminal device based on the first part of locations in the plurality of second locations.

For example, a TDOA positioning method is used as an example. The parameter indicated by the $m^{th}$ piece of first channel estimation information in the M pieces of first channel estimation information includes the signal transmission latency between the $m^{th}$ cell node and the terminal device. FIG. 9 shows a positioning scenario. It is assumed that M is 6, and six cell nodes are respectively denoted as C1, C2, C3, C4, C5, and C6. A path between C6 and a terminal device is NLOS, and paths between the remaining cell nodes and the terminal device are LOS. In this case, when an LMF estimates a location of the terminal device based on M pieces of first channel estimation information and locations of any three cell nodes in the six cell nodes, 20 possible locations may be obtained in total. The 20 locations are shown by using "□" in FIG. 9. Because there is only one NLOS path in the scenario shown in FIG. 9, if all paths between the terminal device and the three cell nodes selected for estimating the location of the terminal are LOS, that is, any three of C1, C2, C3, C4, and C5 are selected, obtained 10 locations are close, and are all located in an area (corresponding to the foregoing first area) of a dashed box in FIG. 9. If the three cell nodes for estimating the location of the terminal include C6, obtained 10 locations are scattered outside the area of the dashed box. Therefore, the LMF may determine a first location of the terminal device based on the 10 locations in the dashed box. For example, the LMF may perform averaging processing on the 10 locations in the dashed box to obtain the first location.

In another optional implementation, the LMF may determine the first location of the terminal device based on N pieces of first channel estimation information and locations of N cell nodes, where the N pieces of first channel estimation information are in a one-to-one correspondence with the N cell nodes, the N cell nodes are included in the M cell nodes, N is a positive integer less than or equal to M, and a path between each of the N cell nodes and the terminal device is line-of-sight. Specifically, the LMF may determine, from the M cell nodes based on the M pieces of first channel estimation information, the N cell nodes corresponding to line-of-sight paths.

For example, a TDOA positioning method is used as an example. The parameter indicated by the $m^{th}$ piece of first channel estimation information in the corresponding M pieces of first channel estimation information includes the signal transmission latency between the $m^{th}$ cell node and the terminal device. First, the LMF may randomly select three cell nodes from the M cell nodes, location coordinates of an $i^{th}$ cell node in the three cell nodes are denoted as $(x_i, y_i, z_i)$, and i is a positive integer from 1 to 3. The LMF calculates location coordinates of the terminal device to be $(x, y, z)$ based on the selected three cell nodes. In this way, the LMF calculates, based on the calculated location coordinates of the terminal device and the location coordinates of the $i^{th}$ cell node, a distance between the terminal device and the $i^{th}$ cell node to be

$$d_i = \sqrt{(x_i - x)^2 + (y_i - y)^2 + (z_i - z)^2}$$ , and may calculate a signal transmission latency between the terminal device and the i$^{th}$ cell node to be $t_i = d_i/c = \sqrt{(x_i - x)^2 + (y_i - y)^2 + (z_i - z)^2}/c$ .

Corresponding to S802, it is assumed that the $m^{th}$ piece of first channel estimation information includes the $m^{th}$ signal transmission latency difference, and the reference latency is the signal transmission latency between the specified cell node in the M cell nodes and the terminal device. The distance between the specified cell node and the terminal device is denoted as $t_0$. A time difference measurement quantity that is reported by the first device to the LMF and that corresponds to the $i^{th}$ cell node in the three cell nodes is $\Delta\tau_i$. A signal transmission latency difference that corresponds to the $i^{th}$ cell node in the three cell nodes and that is calculated by the LMF is $\Delta t_i = t_i - t_0$. Then, a parameter $\varepsilon_i = |\Delta t_i - \Delta\tau_i|$ corresponding to the $i^{th}$ cell node is obtained. $\varepsilon_i$ is used to determine whether a path between the $i^{th}$ cell node and the terminal device is LOS or NLOS. Specifically, the LMF may determine, according to the following formula, whether the path between the $i^{th}$ cell node and the terminal device is LOS or NLOS:

$$los_i = \begin{cases} 1, \varepsilon_i \le th \\ 0, \varepsilon_i > th \end{cases}$$

th is a preset threshold. It may be understood that when $\varepsilon_i \le$ th, $los_i$ is 1, it indicates that a difference between $\Delta t_i$ and $\Delta\tau_i$ is small, and the path between the $i^{th}$ cell node and the terminal device is LOS; or when $\varepsilon_i >$ th, $los_i$ is 0, it indicates that a difference between $\Delta t_i$ and $\Delta\tau_i$ is large, and the path between the $i^{th}$ cell node and the terminal device is NLOS.

The LMF may select, from the M cell nodes by comparing a reporting quantity and a calculation quantity, the N cell nodes corresponding to line-of-sight paths. In addition, corresponding to the description in S802, when the $m^{th}$ piece of first channel estimation information in the M pieces of first channel estimation information indicates another parameter, the type of the signal transmission path between the cell node and the terminal device may be determined in the foregoing manner of comparing the reporting quantity and the calculation quantity. Details are not described herein again in this disclosure.

For example, if the parameter indicated by the $m^{th}$ piece of first channel estimation information in the M pieces of first channel estimation information includes the type of the signal transmission path between the $m^{th}$ cell node and the terminal device, the LMF may directly determine, based on the $m^{th}$ piece of first channel estimation information, that the type of the path corresponding to the $m^{th}$ cell node is line-of-sight or non-line-of-sight, so as to determine, from the M cell nodes, the N cell nodes corresponding to line-of-sight paths.

S804: The LMF sends K pieces of second channel estimation information to a first device, where the first device is configured to train the model.

The K pieces of second channel estimation information are included in the M pieces of second channel estimation information described in S803. It may be understood that the LMF sends some or all of the M pieces of second channel estimation information to the first device, where K is a positive integer, and K is less than or equal to M. A $k^{th}$ piece of second channel estimation information in the K pieces of second channel estimation information corresponds to a channel between a $k^{th}$ cell node in K cell nodes and the terminal device, the K cell nodes are included in the M cell nodes, and k is a positive integer from 1 to K.

Specifically, if the first device is the $m^{th}$ cell node, and the K pieces of second channel estimation information sent by the LMF to the first device include only the second channel estimation information corresponding to the channel between the $m^{th}$ cell node and the terminal device, the $m^{th}$ cell node may train the corresponding model based on the second channel estimation information corresponding to the channel between the $m^{th}$ cell node and the terminal device. In this case, k is synonymous with m.

Alternatively, if the first device is the $m^{th}$ cell node, and the K pieces of second channel estimation information sent by the LMF to the first device are the M pieces of second channel estimation information, the $m^{th}$ cell node may train the corresponding model based on some or all of the M pieces of second channel estimation information.

Alternatively, if the first device is the $m^{th}$ cell node, and the K pieces of second channel estimation information sent by the LMF to the first device are some of the M pieces of second channel estimation information, the $m^{th}$ cell node may train the corresponding model based on the some of the M pieces of second channel estimation information.

Alternatively, if the first device is the terminal device, and the LMF sends the M pieces of second channel estimation information to the first device, the terminal device may train the corresponding model based on the M pieces of second channel estimation information.

Optionally, the first device may determine to train the model based on some or all of the M pieces of second channel estimation information. Alternatively, it is described that the first device may determine to train the model based on second estimation information corresponding to some or all of the M cells. When sending the training request information to the LMF, the first device indicates that K pieces of second channel estimation information are requested. For example, the first device may include indication information whose value is K in the training request information.

Optionally, corresponding to S803 in which the LMF obtains the M pieces of first channel estimation information for a plurality of times, the LMF may uniformly send the K pieces of second channel estimation information for a corresponding quantity of times when obtaining the M pieces of first channel estimation information for a specified quantity of times. Alternatively, the LMF may uniformly send the K pieces of second channel estimation information for a corresponding quantity of times at a specified interval based on the M pieces of first channel estimation information obtained once or more times within specified time. The specified quantity of times or the specified time may be configured by the first device for the LMF, or may be agreed on in advance. This is not limited in this disclosure. In this manner, signaling overheads can be reduced.

S805: The first device trains the model based on the K pieces of second channel estimation information.

Specifically, when training the model, the first device may perform training through supervised learning. The measured channel information is used as a sample, and a sample label is determined based on the obtained second channel estimation information, to obtain a training dataset of the model. A training-related loss function is not limited, for example, may be determined based on factors such as a structure type of the model, a training dataset of the model, and/or an application scenario of the model. Examples of structure types of some models are as follows: a decision tree, a random forest, a support vector machine, or a neural network. The neural network is, for example, a CNN, an RNN, or an FNN.

Specifically, the first device may obtain K pieces of channel information, and a $k^{th}$ piece of channel information in the K pieces of channel information is channel information of the channel between the $k^{th}$ cell node in the K cell nodes and the terminal device. Corresponding to S804, the K cell nodes may be one or more cell nodes. If the first device is a cell node, the K cell nodes may include the first device, and when K is greater than 1, the first device may request, from K-1 cell nodes other than the first device, channel information of channels between the K-1 cell nodes and the terminal device. When the model is trained, an input of the model is determined based on the channel information of the channel between the $k^{th}$ cell node and the terminal device, and a label corresponding to the input is determined based on the second channel estimation information corresponding to the channel between the $k^{th}$ cell node and the terminal device. For example, if the channel information is a channel response, the input of the model may include a channel response of the channel between the $k^{th}$ cell node and the terminal device, a channel response obtained after real and imaginary parts are separated, a channel response obtained after amplitude and phase separation, or the like.

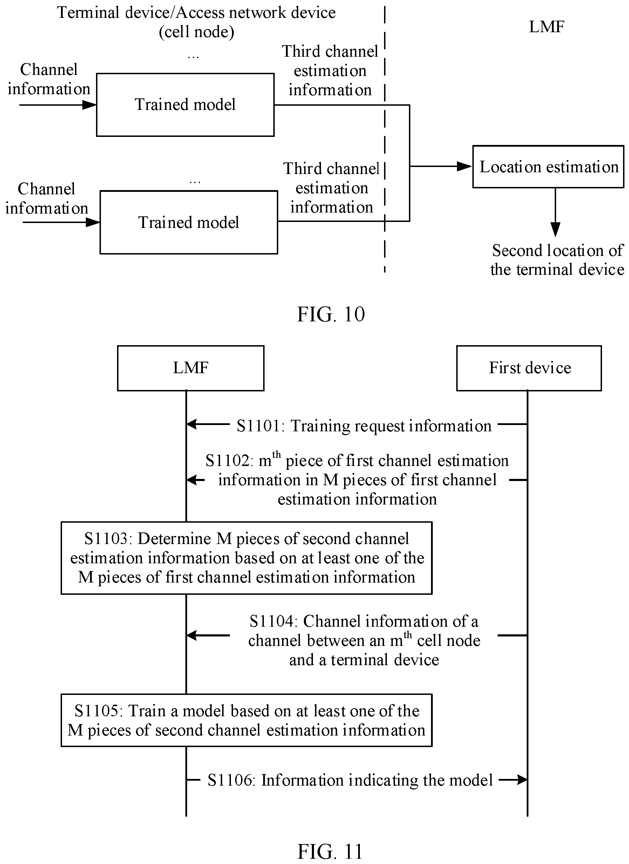

Optionally, a function of the model is related to a parameter type indicated by the second channel estimation information. An input type of the trained model includes the channel information, an output type includes corresponding third channel estimation information. A parameter type indicated by the third channel estimation information is the same as the parameter type indicated by the second channel estimation information. The third channel estimation information is for determining a second location of the terminal device. FIG. 10 shows a model-based positioning method. A trained model may be deployed in a terminal device or an access network device (a cell of the access network device), and is configured to determine, based on channel information related to positioning measurement, third channel estimation information for positioning the terminal device. In this way, the terminal device or the access network device (the cell of the access network device) may send the third channel estimation information to an LMF, and the LMF calculates a second location of the terminal device based on the obtained third channel estimation information.

For example, if the first device may determine channel information between a $t^{th}$ cell node in T cell nodes and the terminal device, the first device may determine a $t^{th}$ piece of third channel estimation information based on channel information of a channel between the $t^{th}$ cell node and the terminal device using the trained model. T is a positive integer greater than 1, and t is a positive integer from 1 to T. Optionally, values of T and M may be the same, or may be different. This is not limited.

When the parameter type indicated by the second channel estimation information includes the distance between the cell node and the terminal device, a parameter indicated by the $t^{th}$ piece of third channel estimation information includes a distance between the $t^{th}$ cell node and the terminal device under a LOS condition. The distance may also be referred to as a LOS distance.

When the parameter type indicated by the second channel estimation information includes the signal transmission latency or the signal transmission latency difference between the cell node and the terminal device, the parameter indicated by the $t^{th}$ piece of third channel estimation information includes a signal transmission latency or a signal transmission latency difference between the $t^{th}$ cell node and the terminal device under the LOS condition. The signal transmission latency may also be referred to as a signal transmission latency that meets LOS transmission, and the signal transmission latency difference may also be referred to as a signal transmission latency difference that meets LOS transmission.

When the parameter type indicated by the second channel estimation information includes the signal angle of departure or the signal angle of arrival relative to the cell node, the parameter indicated by the $t^{th}$ piece of third channel estimation information includes a signal angle of departure or a signal angle of arrival that corresponds to the $t^{th}$ cell node and that meets LOS transmission.

When the parameter type indicated by the second channel estimation information includes the type of the signal transmission path between the cell node and the terminal device, the parameter indicated by the $t^{th}$ piece of third channel estimation information includes a type of an actual signal transmission path between the $t^{th}$ cell node and the terminal device.

It should be noted that the foregoing examples may be combined. For example, in a possible case, the parameter type indicated by the second channel estimation information includes the signal transmission latency between the cell node and the terminal device and the type of the signal transmission path between the cell node and the terminal device. The first device may determine the $t^{th}$ piece of third channel estimation information based on the channel information of the channel between the $t^{th}$ cell node and the terminal device using the trained model. The parameter indicated by the $t^{th}$ piece of third channel estimation channel information includes the signal transmission latency that meets LOS transmission between the $t^{th}$ cell node and the terminal device, and the type of the actual signal transmission path between the $t^{th}$ cell node and the terminal device. For example, the type of the actual signal transmission path is NLOS.

In this solution, a label for model training is inferred based on channel estimation information obtained through measurement by the terminal device or the cell node, and the label for model training is provided for the terminal device or the cell node, so that the terminal device or the cell node trains the model. Such a training manner is more suitable for an actual scenario environment, and can improve performance of the model, thereby improving positioning accuracy.

In the examples of this disclosure, a cell node participating in model training and a cell node participating in model inference may be the same, or may be different. For example, model training is performed via a first group of cell nodes, and a model obtained through training is used for a second group of cell nodes. The first group of cell nodes and the second group of cell nodes may be the same, or may be different. This is not limited.

In the examples of this disclosure, a terminal device participating in model training and a terminal device participating in model inference may be the same, or may be different. For example, model training is performed via a terminal A, and a model obtained through training is used for a terminal B. The terminal A and the terminal B may be the same, or may be different. This is not limited.

Solution 2

FIG. 11 shows a communication method. The method mainly includes the following procedure.

Optionally, S1101: A first device or an LMF initiates a request for training a model.

For implementation of this step, refer to S801. Details are not described herein again in this disclosure.

S1102: The LMF obtains M pieces of first channel estimation information.

For implementation of this step, refer to S802. Details are not described herein again in this disclosure.

S1103: The LMF determines M pieces of second channel estimation information based on at least one of the M pieces of first channel estimation information.

For implementation of this step, refer to S803. Details are not described herein again in this disclosure.

S1104: The LMF obtains channel information of channels between M cell nodes and a terminal device.

Specifically, the LMF obtains channel information of a channel between an $m^{th}$ cell node and the terminal device from the first device. For understanding of the channel information of the channel between the $m^{th}$ cell node and the terminal device measured by the first device, refer to the content described in S802. Details are not described herein again in this disclosure.

S1105: The LMF trains the model based on at least one of the M pieces of second channel estimation information.

Optionally, when the first device is the $m^{th}$ cell node, the LMF may train the corresponding model for the $m^{th}$ cell node based on the $m^{th}$ piece of second channel estimation information, where when the model is trained, an input of the model is determined based on the channel information of the channel between the $m^{th}$ cell node and the terminal device, and a label corresponding to the input is determined based on the second channel estimation information corresponding to the channel between the $m^{th}$ cell node and the terminal device.

Alternatively, optionally, the LMF may train the same model for K cell nodes based on K pieces of second channel estimation information, where K is a positive integer less than or equal to M, the K cell nodes are included in the M cell nodes, and are some or all nodes of the M cell nodes, and the K pieces of second channel estimation information are included in the M pieces of second channel estimation information. A $k^{th}$ piece of second channel estimation information in the K pieces of second channel estimation information corresponds to a channel between a $k^{th}$ cell node in the K cell nodes and the terminal device. When the model is trained, an input of the model is determined based on channel information of the channel between the $k^{th}$ cell node and the terminal device, and a label corresponding to the input is determined based on the second channel estimation information corresponding to the channel between the $k^{th}$ cell node and the terminal device.

Alternatively, optionally, when the first device is the terminal device, the LMF may train the model based on the M pieces of second channel estimation information. When the model is trained, an input of the model is determined based on channel information of channels between cell nodes in the M cell nodes and the terminal device, and a label corresponding to the input is determined based on second channel estimation information corresponding to the channels between the cell nodes in the M cell nodes and the terminal device.

S1106: The LMF sends, to the first device, information indicating the model.

It may be understood that when the first device is the $m^{th}$ cell node, the LMF sends, to the first device, a model corresponding to the $m^{th}$ cell. It may be understood according to the description of S1105 that the model corresponding to the $m^{th}$ cell may be specific to the cell, or may be shared by the cell and a plurality of other cells. This is not limited.

Further, the first device extracts the third channel estimation information from the measured channel information using the trained model, where the third estimation information is used to determine a second location of the terminal device. For details of implementation, refer to the descriptions in the solution 1. Details are not described herein again in this disclosure.

In this solution, the LMF infers, based on the channel estimation information measured by the terminal device or the cell node, a label for model training, and trains the model. Such a manner is more suitable for an actual scenario environment, and can improve performance of the model. In this way, the LMF provides the trained model for the terminal device or the cell node, to determine the channel estimation information for positioning, thereby improving positioning accuracy.

Solution 3

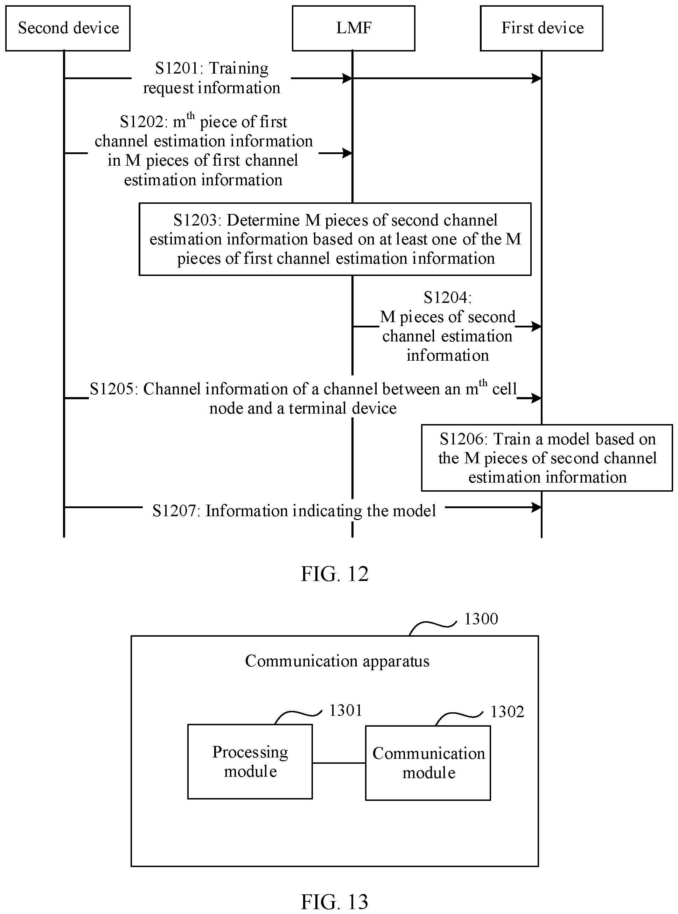

FIG. 12 shows a communication method. The method mainly includes the following procedure.

Optionally, S1201: An LMF obtains training request information.

Specifically, a first device that performs model training may send the training request information to the LMF, or a measurement quantity reporting side may send the training request information to the LMF. The measurement quantity reporting side may be a terminal device or a cell node of an access network device.

For example, a second device indicates the measurement quantity reporting side. FIG. 12 shows that an LMF obtains training request information from a second device. For a definition of the training request information, refer to the descriptions in the solution corresponding to FIG. 8. Details are not described herein again in this disclosure. Optionally, when a model is trained, locations of M cell nodes are used to estimate a location of a terminal device. The second device may be an $m^{th}$ cell node in the M cell nodes or the terminal device, and the LMF may obtain an $m^{th}$ piece of first channel estimation information from the second device. For understanding of definitions of the M cell nodes and the first channel estimation information, refer to S801. Details are not described herein again in this disclosure.

S1202: The LMF obtains M pieces of first channel estimation information.

For implementation of this step, refer to S802. Details are not described herein again in this disclosure.

S1203: The LMF determines M pieces of second channel estimation information based on at least one of the M pieces of first channel estimation information.

For implementation of this step, refer to S803. Details are not described herein again in this disclosure.

S1204: The LMF sends the M pieces of second channel estimation information to the first device, where the first device is configured to train the model.

Specifically, the first device may be an AI network element that has a model training function in addition to the M cell nodes and the terminal device, and the LMF sends the M pieces of second channel estimation information to the first device.

For implementation of this step, refer to S804. Details are not described herein again in this disclosure.

S1205: The first device obtains channel information of channels between the M cell nodes and the terminal device.

For example, the first device may obtain, from the second device, channel information of a channel between the $m^{th}$ cell node and the terminal device.

S1206: The first device trains the model based on the M pieces of second channel estimation information.

Specifically, for implementation of this step, refer to S1105. Details are not described herein again in this disclosure.

S1207: The first device sends, to the second device, information indicating the model.

Specifically, for implementation of this step, refer to S1106. Details are not described herein again in this disclosure.

Further, the second device extracts the third channel estimation information from the measured channel information using the trained model, where the third estimation information is used to determine a second location of the terminal device. For details of implementation, refer to the descriptions in the solution 1. Details are not described herein again in this disclosure.

In this solution, the LMF infers, based on the channel estimation information measured by the terminal device or the cell node, a label for model training, and provided the label for the independent AI network element to train the model. Such a manner is more suitable for an actual scenario environment, and can improve performance of the model. In this way, the AI network element provides the trained model for the terminal device or the cell node, to determine the channel estimation information for positioning, thereby improving positioning accuracy.

Based on a same concept, refer to FIG. 13. This disclosure provides a communication apparatus 1300. The communication apparatus 1300 includes a processing module 1301 and a communication module 1302. The communication apparatus 1300 may be an LMF, or may be a communication apparatus that is used in the LMF or used in a matching manner with the LMF and that can implement a communication method performed at an LMF side. Alternatively, the communication apparatus 1300 may be a first device, or may be a communication apparatus that is used in the first device or used in a matching manner with the first device and that can implement a communication method performed at a first device side. Alternatively, the communication apparatus 1300 may be a second device, or may be a communication apparatus that is used in the second device or used in a matching manner with the second device and that can implement a communication method performed at a second device side.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation at the LMF side or the first device side in the foregoing method. A component that is in the communication module and that is configured to implement a receiving function may be considered as a receiving unit, and a component that is in the communication module and that is configured to implement a sending function may be considered as a sending unit. In other words, the communication module includes the receiving unit and the sending unit.

When the communication apparatus 1300 is used in the LMF, the processing module 1301 may be configured to implement the processing function of the LMF in the example shown in FIG. 8, FIG. 11, or FIG. 12, and the communication module 1302 may be configured to implement the receiving/sending function of the LMF in the example shown in FIG. 8, FIG. 11, or FIG. 12. Alternatively, the communication apparatus may be understood with reference to the possible designs in the fifth aspect and the ninth aspect in the summary.

When the communication apparatus 1300 is used in the first device or the second device, the processing module 1301 may be configured to implement the processing function of the first device or the second device in the example shown in FIG. 8, FIG. 11, or FIG. 12, and the communication module 1302 may be configured to implement the receiving/sending function of the first device or the second device in the example shown in FIG. 8, FIG. 11, or FIG. 12. In FIG. 8 and FIG. 11, the first device indicates a terminal device or a cell node. In FIG. 12, the first device indicates an AI network element, and the second device indicates a terminal device or a cell node. Alternatively, the communication apparatus may be understood with reference to the sixth aspect and the possible designs in the sixth aspect in the summary. Alternatively, the communication apparatus may be understood with reference to the seventh aspect and the possible designs in the seventh aspect in the summary. Alternatively, the communication apparatus may be understood with reference to the eighth aspect and the possible designs in the eighth aspect in the summary.

In addition, it should be noted that the communication module and/or the processing module may be implemented using a virtual module. For example, the processing module may be implemented using a software functional unit or a virtual apparatus, and the communication module may be implemented using a software functional or virtual apparatus. Alternatively, the processing module or the communication module may be implemented using a physical apparatus. For example, if the apparatus is implemented using a chip/chip circuit, the communication module may be an input/output circuit and/or a communication interface, and performs an input operation (corresponding to the receiving operation) and an output operation (corresponding to the sending operation). The processing module is an integrated processor, a microprocessor, or an integrated circuit.

Division into the modules in this disclosure is an example, is merely division into logical functions, and may be other division during actual implementation. In addition, functional modules in examples of this disclosure may be integrated into one processor, each of the modules may exist alone physically, or two or more modules may be integrated into one module. The integrated module may be implemented in a form of hardware, or may be implemented in a form of a software functional module.

This disclosure further provides a communication apparatus 1400 based on a same technical concept. For example, the communication apparatus 1400 may be a chip or a chip system. Optionally, in this disclosure, the chip system may include a chip, or may include a chip and another discrete component.

The communication apparatus 1400 may be configured to implement a function of any network element in the communication system described in the foregoing examples. The communication apparatus 1400 may include at least one processor 1410. The processor 1410 is coupled to a memory. Optionally, the memory may be located in the apparatus, the memory may be integrated with the processor, or the memory may be located outside the apparatus. For example, the communication apparatus 1400 may further include at least one memory 1420. The memory 1420 stores a necessary computer program, a computer program or instructions, and/or data for implementing any one of the foregoing examples. The processor 1410 may execute the computer program stored in the memory 1420, to complete the method in any one of the foregoing examples.

The communication apparatus 1400 may further include a communication interface 1430, and the communication apparatus 1400 may exchange information with another device through the communication interface 1430. For example, the communication interface 1430 may be a transceiver, a circuit, a bus, a module, a pin, or a communication interface of another type. When the communication apparatus 1400 is a chip-type apparatus or circuit, the communication interface 1430 in the apparatus 1400 may alternatively be an input/output circuit, and may input information (or referred to as receiving information) and output information (or referred to as sending information). The processor is an integrated processor, a microprocessor, an integrated circuit, or a logic circuit. The processor may determine output information based on input information.

Couplings in this disclosure are indirect couplings or communication connections between apparatuses, units, or modules, and may be electrical, mechanical, or in another form, and are used for information exchange between the apparatuses, the units, and the modules. The processor 1410 may work with the memory 1420 and the communication interface 1430. A specific connection medium between the processor 1410, the memory 1420, and the communication interface 1430 is not limited in this disclosure.

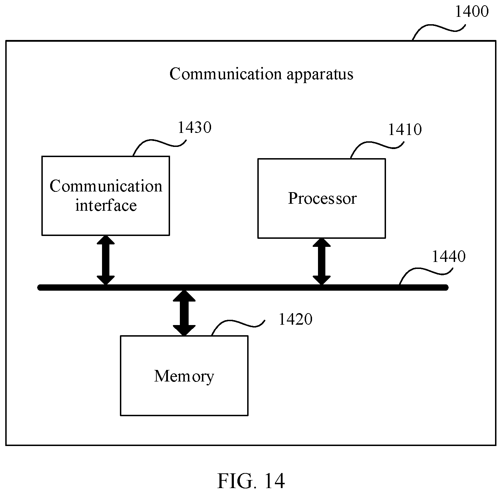

Optionally, Refer to FIG. 14. The processor 1410, the memory 1420, and the communication interface 1430 are connected to each other via a bus 1440. The bus 1440 may be a peripheral component interconnect (peripheral component interconnect, PCI) bus, an extended industry standard architecture (extended industry standard architecture, EISA) bus, and or the like. The bus may be classified into an address bus, a data bus, a control bus, and the like. For ease of representation, the bus is represented by using only one bold line in FIG. 14, but this does not mean that there is only one bus or one type of bus.

In this disclosure, the processor may be a general-purpose processor, a digital signal processor, an application-specific integrated circuit, a field programmable gate array or another programmable logic device, a discrete gate or a transistor logic device, or a discrete hardware component, and may implement or perform methods, steps, and logical block diagrams that are disclosed in this disclosure. The general-purpose processor may be a microprocessor or any conventional processor or the like. The steps of the methods disclosed with reference to this disclosure may be directly implemented by a hardware processor, or may be implemented by a combination of hardware and a software module in a processor.

In this disclosure, the memory may be a nonvolatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction or a data structure and that can be accessed by a computer, but is not limited thereto. The memory in this disclosure may alternatively be a circuit or any other apparatus that can implement a storage function, and is configured to store program instructions and/or data.

In a possible implementation, the communication apparatus 1400 may be used in a first device. Specifically, the communication apparatus 1400 may be the first device, or may be an apparatus that can support the first device in implementing the function of the first device in any one of the foregoing examples. The memory 1420 stores a computer program (or instructions) and/or data for implementing a function of the first device in any one of the foregoing examples. The processor 1410 may execute the computer program stored in the memory 1420, to complete the method performed by the first device in any one of the foregoing examples. A communication interface in the communication apparatus 1400 used in the first device may be configured to interact with an LMF, and send information to the LMF or receive information from the LMF.

In a possible implementation, the communication apparatus 1400 may be used in a second device. Specifically, the communication apparatus 1400 may be the second device, or may be an apparatus that can support the second device in implementing the function of the second device in any one of the foregoing examples. The memory 1420 stores a computer program (or instructions) and/or data for implementing a function of the first device in any one of the foregoing examples. The processor 1410 may execute the computer program stored in the memory 1420, to complete the method performed by the second device in any one of the foregoing examples. A communication interface in the communication apparatus 1400 used in the second device may be configured to interact with an LMF, and send information to the LMF or receive information from the LMF.

In a possible implementation, the communication apparatus 1400 may be used in an LMF. Specifically, the communication apparatus 1400 may be the LMF, or may be an apparatus that can support the LMF in implementing the function of the LMF in any one of the foregoing examples. The memory 1420 stores a computer program (or instructions) and/or data for implementing a function of the LMF in any one of the foregoing examples. The processor 1410 may execute the computer program stored in the memory 1420, to complete the method performed by the LMF in any one of the foregoing examples. A communication interface in the communication apparatus 1400 used in the LMF may be configured to interact with a first device or a second device, for example, send information to the first device or the second device, or receive information from the first device or the second device.

The communication apparatus 1400 provided in this example may be used in the first device to complete the method performed by the first device, may be used in the second device to complete the method performed by the second device, or may be used in the LMF to complete the method performed by the LMF. Therefore, for technical effect that can be achieved by this example, refer to the foregoing method examples. Details are not described herein again.

Based on the foregoing example, this disclosure provides a communication system, including a terminal device, at least one cell node, and an LMF. Optionally, the system further includes an AI network element. The terminal device, the at least one cell node, the AI network element, and the LMF may implement the communication method provided in the example shown in FIG. 8, FIG. 11, or FIG. 12. Specifically, in FIG. 8 and FIG. 11, the first device indicates a terminal device or a cell node. In FIG. 12, the first device indicates an AI network element, and the second device indicates a terminal device or a cell node.

All or some of the technical solutions provided in this disclosure may be implemented by using software, hardware, firmware, or any combination thereof. When software is used to implement the technical solutions, all or some of the technical solutions may be implemented in a form of a computer program product. The computer program product includes one or more computer instructions. When the computer program instructions are loaded and executed on the computer, all or some of the procedures or functions in this disclosure are generated. The computer may be a general-purpose computer, a dedicated computer, a computer network, an LMF, a terminal device, a cell node, an AI network element, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this disclosure, without a logical contradiction, mutual reference can be made between examples. For example, mutual reference can be made between methods and/or terms in method examples, mutual reference can be made between functions and/or terms in apparatus examples, and mutual reference can be made between functions and/or terms in the apparatus examples and the method examples.

It is clear that a person skilled in the art can make various modifications and variations to this disclosure without departing from the scope of this disclosure. This disclosure is intended to cover these modifications and variations of this disclosure provided that they fall within the scope of protection defined by the following claims and their equivalent technologies.

**Claims**

1. A communication method, comprising:

   obtaining M pieces of first channel estimation information, wherein an m$^{th}$ piece of first channel estimation information in the M pieces of first channel estimation information is estimation information of a channel between

an m<sup>th</sup> cell node in M cell nodes and a terminal device, M is a positive integer greater than 1, and m is a positive integer from 1 to M; and

determining M pieces of second channel estimation information based on at least one of the M pieces of first channel estimation information, wherein an m<sup>th</sup> piece of second channel estimation information in the M pieces of second channel estimation information corresponds to the channel between the m<sup>th</sup> cell node and the terminal device.

2. The method according to claim 1, wherein the second channel estimation information is for training a model, when the model is trained, an input of the model is determined based on channel information of the channel between the m<sup>th</sup> cell node and the terminal device, and a label corresponding to the input is determined based on the second channel estimation information corresponding to the channel between the m<sup>th</sup> cell node and the terminal device.

3. The method according to claim 1 or 2, further comprising:
sending K pieces of second channel estimation information to a first device, wherein the K pieces of second channel estimation information are comprised in the M pieces of second channel estimation information, and K is a positive integer.

4. The method according to claim 3, further comprising:
obtaining training request information from the first device, wherein the training request information is for requesting the K pieces of second channel estimation information.

5. The method according to claim 4, wherein the training request information indicates a parameter type indicated by the second channel estimation information.

6. The method according to any one of claims 1 to 5, wherein the obtaining M pieces of first channel estimation information comprises:
obtaining the m<sup>th</sup> piece of first channel estimation information from the first device, wherein the first device is the m<sup>th</sup> cell node, or the first device is the terminal device.

7. The method according to any one of claims 1 to 6, wherein the determining M pieces of second channel estimation information based on at least one of the M pieces of first channel estimation information comprises:

determining a first location of the terminal device based on the at least one of the M pieces of first channel estimation information; and
determining the M pieces of second channel estimation information based on the first location of the terminal device and locations of the M cell nodes.

8. The method according to claim 7, wherein the determining a first location of the terminal device based on the at least one of the M pieces of first channel estimation information comprises:

determining a plurality of second locations of the terminal device based on the M pieces of first channel estimation information and the locations of the M cell nodes, wherein a first part of locations in the plurality of second locations are located in a first area, a second part of locations in the plurality of second locations are not located in the first area, and a quantity of locations of the first part is greater than a quantity of locations of the second part; and
determining the first location of the terminal device based on the first part of locations in the plurality of second locations; or
determining the first location of the terminal device based on N pieces of first channel estimation information and locations of N cell nodes, wherein the N pieces of first channel estimation information are in a one-to-one correspondence with the N cell nodes, the N cell nodes are comprised in the M cell nodes, N is a positive integer less than or equal to M, and a path between each of the N cell nodes and the terminal device is line-of-sight.

9. The method according to any one of claims 1 to 8, wherein the m<sup>th</sup> piece of first channel estimation information indicates one or more of the following parameters: a distance between the m<sup>th</sup> cell node and the terminal device, a signal transmission latency or a signal transmission latency difference between the m<sup>th</sup> cell node and the terminal device, a signal angle of departure or a signal angle of arrival corresponding to the m<sup>th</sup> cell node, and signal quality between the m<sup>th</sup> cell node and the terminal device; or the m<sup>th</sup> piece of first channel estimation information indicates that a signal transmission path between the m<sup>th</sup> cell node and the terminal device is line-of-sight or non-line-of-sight.

10. The method according to any one of claims 1 to 9, wherein the $m^{th}$ piece of second channel estimation information indicates at least one of the following:

when the signal transmission path between the $m^{th}$ cell node and the terminal device is line-of-sight, the distance between the $m^{th}$ cell node and the terminal device;
when the signal transmission path between the $m^{th}$ cell node and the terminal device is line-of-sight, the signal transmission latency or the signal transmission latency difference between the $m^{th}$ cell node and the terminal device;
when the signal transmission path between the $m^{th}$ cell node and the terminal device is line-of-sight, the signal angle of departure or the signal angle of arrival corresponding to the $m^{th}$ cell node;
when the signal transmission path between the $m^{th}$ cell node and the terminal device is line-of-sight, the signal quality between the $m^{th}$ cell node and the terminal device; and
the actual signal transmission path between the $m^{th}$ cell node and the terminal device is line-of-sight or non-line-of-sight.

11. The method according to any one of claims 1 to 10, wherein the M cell nodes belong to one access network device, or at least two of the M cell nodes belong to different access network devices.

12. A communication method, comprising:

sending an $m^{th}$ piece of first channel estimation information, wherein the $m^{th}$ piece of first channel estimation information belongs to M pieces of first channel estimation information, M is a positive integer greater than 1, m is a positive integer from 1 to M, the $m^{th}$ piece of first channel estimation information in the M pieces of first channel estimation information is estimation information of a channel between an $m^{th}$ cell node in M cell nodes and a terminal device, at least one of the M pieces of first channel estimation information is for determining M pieces of second channel estimation information, and an $m^{th}$ piece of second channel estimation information in the M pieces of second channel estimation information corresponds to the channel between the $m^{th}$ cell node and the terminal device; and
obtaining information indicating a model, wherein when the model is trained, an input of the model is determined based on channel information of the channel between the $m^{th}$ cell node and the terminal device, and a label corresponding to the input is determined based on the second channel estimation information corresponding to the channel between the $m^{th}$ cell node and the terminal device.

13. The method according to claim 12, further comprising: sending the channel information of the channel between the $m^{th}$ cell node and the terminal device.

14. The method according to claim 12 or 13, wherein the $m^{th}$ piece of first channel estimation information indicates one or more of the following parameters: a distance between the $m^{th}$ cell node and the terminal device, a signal transmission latency or a signal transmission latency difference between the $m^{th}$ cell node and the terminal device, a signal angle of departure or a signal angle of arrival corresponding to the $m^{th}$ cell node, and signal quality between the $m^{th}$ cell node and the terminal device; or the $m^{th}$ piece of first channel estimation information indicates that a signal transmission path between the $m^{th}$ cell node and the terminal device is line-of-sight or non-line-of-sight.

15. The method according to any one of claims 12 to 14, wherein the $m^{th}$ piece of second channel estimation information indicates at least one of the following:

when the signal transmission path between the $m^{th}$ cell node and the terminal device is line-of-sight, the distance between the $m^{th}$ cell node and the terminal device;
when the signal transmission path between the $m^{th}$ cell node and the terminal device is line-of-sight, the signal transmission latency or the signal transmission latency difference between the $m^{th}$ cell node and the terminal device;
when the signal transmission path between the $m^{th}$ cell node and the terminal device is line-of-sight, the signal angle of departure or the signal angle of arrival corresponding to the $m^{th}$ cell node;
when the signal transmission path between the $m^{th}$ cell node and the terminal device is line-of-sight, the signal quality between the $m^{th}$ cell node and the terminal device; and
the actual signal transmission path between the $m^{th}$ cell node and the terminal device is line-of-sight or non-line-of-sight.

16. The method according to any one of claims 12 to 15, wherein the M cell nodes belong to one access network device, or at least two of the M cell nodes belong to different access network devices.

17. A communication method, comprising:

determining K pieces of channel information, wherein a $k^{th}$ piece of channel information in the K pieces of channel information is channel information of a channel between a $k^{th}$ cell node in K cell nodes and a terminal device, K is a positive integer, and k is a positive integer from 1 to K;

obtaining K pieces of second channel estimation information, wherein a $k^{th}$ piece of second channel estimation information in the K pieces of second channel estimation information corresponds to the channel between the $k^{th}$ cell node and the terminal device, the K pieces of second channel estimation information are determined based on at least one of M pieces of first channel estimation information, an $m^{th}$ piece of first channel estimation information in the M pieces of first channel estimation information is estimation information of a channel between an $m^{th}$ cell node in M cells and the terminal device, the K cells are comprised in the M cells, M is a positive integer greater than 1, and m is a positive integer from 1 to M; and

training a model based on the K pieces of second channel estimation information, wherein when the model is trained, an input of the model is determined based on the channel information of the channel between the $k^{th}$ cell node and the terminal device, and a label corresponding to the input is determined based on the second channel estimation information corresponding to the channel between the $k^{th}$ cell node and the terminal device.

18. The method according to claim 17, further comprising:
sending training request information, wherein the training request information is for requesting the K pieces of second channel estimation information.

19. The method according to claim 18, wherein the training request information indicates a parameter type indicated by the second channel estimation information.

20. The method according to claim 17 or 18, further comprising:
sending the first channel estimation information of the channel between the $m^{th}$ cell node and the terminal device.

21. The method according to any one of claims 17 to 20, wherein the $m^{th}$ piece of first channel estimation information indicates one or more of the following parameters: a distance between the $m^{th}$ cell node and the terminal device, a signal transmission latency between the $m^{th}$ cell node and the terminal device, a signal angle of departure or a signal angle of arrival corresponding to the $m^{th}$ cell node, and signal quality between the $m^{th}$ cell node and the terminal device; or the $m^{th}$ piece of first channel estimation information indicates that a signal transmission path between the $m^{th}$ cell node and the terminal device is line-of-sight or non-line-of-sight.

22. The method according to any one of claims 17 to 21, wherein the $k^{th}$ piece of second channel estimation information indicates at least one of the following:

when a signal transmission path between the $k^{th}$ cell node and the terminal device is line-of-sight, a distance between the $k^{th}$ cell node and the terminal device;

when the signal transmission path between the $k^{th}$ cell node and the terminal device is line-of-sight, a signal transmission latency or a signal transmission latency difference between the $k^{th}$ cell node and the terminal device;

when the signal transmission path between the $k^{th}$ cell node and the terminal device is line-of-sight, a signal angle of departure or a signal angle of arrival corresponding to the $k^{th}$ cell node;

when the signal transmission path between the $k^{th}$ cell node and the terminal device is line-of-sight, signal quality between the $k^{th}$ cell node and the terminal device; and

the actual signal transmission path between the $k^{th}$ cell node and the terminal device is line-of-sight or non-line-of-sight.

23. The method according to any one of claims 17 to 22, wherein the M cell nodes belong to one access network device, or at least two of the M cell nodes belong to different access network devices.

24. A communication method, comprising:

determining a $t^{th}$ piece of channel information, wherein the $t^{th}$ piece of channel information is channel information of a channel between a $t^{th}$ cell node in T cell nodes and a terminal device, T is a positive integer greater than 1, and t is a positive integer from 1 to T;

determining a $t^{th}$ piece of third channel estimation information based on the $t^{th}$ piece of channel information and a model, wherein the $t^{th}$ piece of third channel estimation information corresponds to the channel between the $t^{th}$ cell node and the terminal device, an input of the model is determined based on the channel information of the channel between the $t^{th}$ cell node and the terminal device, and an output corresponding to the input comprises the $t^{th}$ piece of third channel estimation information; and

sending the $t^{th}$ piece of third channel estimation information, wherein the $t^{th}$ piece of third channel estimation information is for positioning the terminal device.

25. The method according to claim 24, wherein the $t^{th}$ piece of third channel estimation information indicates one or more of the following parameters: a line-of-sight LOS length distance between the $t^{th}$ cell node and the terminal device, a signal transmission latency or a channel transmission latency difference that meets LOS transmission between the $t^{th}$ cell node and the terminal device, a signal angle of departure or a signal angle of arrival that meets LOS transmission and that corresponds to the $t^{th}$ cell node, signal quality that meets LOS transmission between the $t^{th}$ cell node and the terminal device, a type of an actual signal transmission path between the $t^{th}$ cell node and the terminal device, or a type of an actual signal transmission path between the $t^{th}$ cell node and the terminal device, wherein the type is LOS or non-line-of-sight NLOS.

26. The method according to claim 24 or 25, wherein when the model is trained, the input of the model is determined based on channel information of a channel between an $m^{th}$ cell node in M cell nodes and the terminal device, and a label corresponding to the input is determined based on second channel estimation information corresponding to the channel between the $m^{th}$ cell node and the terminal device, wherein

M is a positive integer greater than 1, values of M and T are the same or different, m is a positive integer from 1 to M, the second channel estimation information corresponding to the channel between the $m^{th}$ cell node and the terminal device is determined based on at least one of M pieces of first channel estimation information, and an $m^{th}$ piece of first channel estimation information in the M pieces of first channel estimation information is estimation information of the channel between the $m^{th}$ cell node in the M cell nodes and the terminal device.

27. A communication apparatus, comprising:

a communication module, configured to obtain M pieces of first channel estimation information, wherein an $m^{th}$ piece of first channel estimation information in the M pieces of first channel estimation information is estimation information of a channel between an $m^{th}$ cell node in M cell nodes and a terminal device, M is a positive integer greater than 1, and m is a positive integer from 1 to M; and

a processing module, configured to determine M pieces of second channel estimation information based on at least one of the M pieces of first channel estimation information, wherein an $m^{th}$ piece of second channel estimation information in the M pieces of second channel estimation information corresponds to the channel between the $m^{th}$ cell node and the terminal device.

28. The apparatus according to claim 27, wherein the second channel estimation information is for training a model, when the model is trained, an input of the model is determined based on channel information of the channel between the $m^{th}$ cell node and the terminal device, and a label corresponding to the input is determined based on the second channel estimation information corresponding to the channel between the $m^{th}$ cell node and the terminal device.

29. The apparatus according to claim 27 or 28, wherein the communication module is further configured to send K pieces of second channel estimation information to a first device, the K pieces of second channel estimation information are comprised in the M pieces of second channel estimation information, and K is a positive integer.

30. The apparatus according to claim 29, wherein the communication module is further configured to obtain training request information from the first device, and the training request information is for requesting the K pieces of second channel estimation information.

31. The apparatus according to claim 30, wherein the training request information indicates a parameter type indicated by the second channel estimation information.

32. The apparatus according to any one of claims 27 to 31, wherein the communication module is further configured to obtain the $m^{th}$ piece of first channel estimation information from the first device, and the first device is the $m^{th}$ cell node, or the first device is the terminal device.

33. The apparatus according to any one of claims 27 to 32, wherein the processing module is specifically configured to:

determine a first location of the terminal device based on the at least one of the M pieces of first channel estimation information; and
determine the M pieces of second channel estimation information based on the first location of the terminal device and locations of the M cell nodes.

34. The apparatus according to claim 33, wherein the processing module is specifically configured to:

determine a plurality of second locations of the terminal device based on the M pieces of first channel estimation information and the locations of the M cell nodes, wherein a first part of locations in the plurality of second locations are located in a first area, a second part of locations in the plurality of second locations are not located in the first area, and a quantity of locations of the first part is greater than a quantity of locations of the second part; and determine the first location of the terminal device based on the first part of locations in the plurality of second locations; or
determine the first location of the terminal device based on N pieces of first channel estimation information and locations of N cell nodes, wherein the N pieces of first channel estimation information are in a one-to-one correspondence with the N cell nodes, the N cell nodes are comprised in the M cell nodes, N is a positive integer less than or equal to M, and a path between each of the N cell nodes and the terminal device is line-of-sight.

35. The apparatus according to any one of claims 27 to 34, wherein the $m^{th}$ piece of first channel estimation information indicates one or more of the following parameters: a distance between the $m^{th}$ cell node and the terminal device, a signal transmission latency or a signal transmission latency difference between the $m^{th}$ cell node and the terminal device, a signal angle of departure or a signal angle of arrival corresponding to the $m^{th}$ cell node, and signal quality between the $m^{th}$ cell node and the terminal device; or the $m^{th}$ piece of first channel estimation information indicates that a signal transmission path between the $m^{th}$ cell node and the terminal device is line-of-sight or non-line-of-sight.

36. The apparatus according to any one of claims 27 to 35, wherein the $m^{th}$ piece of second channel estimation information indicates at least one of the following:

when the signal transmission path between the $m^{th}$ cell node and the terminal device is line-of-sight, the distance between the $m^{th}$ cell node and the terminal device;
when the signal transmission path between the $m^{th}$ cell node and the terminal device is line-of-sight, the signal transmission latency or the signal transmission latency difference between the $m^{th}$ cell node and the terminal device;
when the signal transmission path between the $m^{th}$ cell node and the terminal device is line-of-sight, the signal angle of departure or the signal angle of arrival corresponding to the $m^{th}$ cell node;
when the signal transmission path between the $m^{th}$ cell node and the terminal device is line-of-sight, the signal quality between the $m^{th}$ cell node and the terminal device; and
the actual signal transmission path between the $m^{th}$ cell node and the terminal device is line-of-sight or non-line-of-sight.

37. The apparatus according to any one of claims 27 to 36, wherein the M cell nodes belong to one access network device, or at least two of the M cell nodes belong to different access network devices.

38. A communication apparatus, comprising:

a processing module, configured to send an $m^{th}$ piece of first channel estimation information via a communication module, wherein the $m^{th}$ piece of first channel estimation information belongs to M pieces of first channel estimation information, M is a positive integer greater than 1, m is a positive integer from 1 to M, the $m^{th}$ piece of first channel estimation information in the M pieces of first channel estimation information is estimation information of a channel between an $m^{th}$ cell node in M cell nodes and a terminal device, at least one of the M pieces of first channel estimation information is for determining M pieces of second channel estimation information, and an $m^{th}$ piece of second channel estimation information in the M pieces of second channel estimation information corresponds to the channel between the $m^{th}$ cell node and the terminal device; and
the communication module, configured to obtain information indicating a model, wherein when the model is trained, an input of the model is determined based on channel information of the channel between the $m^{th}$ cell node and the terminal device, and a label corresponding to the input is determined based on the second channel estimation information corresponding to the channel between the m$^{th}$ cell node and the terminal device.

39. The apparatus according to claim 38, wherein the processing module is further configured to send the channel information of the channel between the m$^{th}$ cell node and the terminal device via the communication module.

40. The apparatus according to claim 38 or 39, wherein the m$^{th}$ piece of first channel estimation information indicates one or more of the following parameters: a distance between the m$^{th}$ cell node and the terminal device, a signal transmission latency or a signal transmission latency difference between the m$^{th}$ cell node and the terminal device, a signal angle of departure or a signal angle of arrival corresponding to the m$^{th}$ cell node, and signal quality between the m$^{th}$ cell node and the terminal device; or the m$^{th}$ piece of first channel estimation information indicates that a signal transmission path between the m$^{th}$ cell node and the terminal device is line-of-sight or non-line-of-sight.

41. The apparatus according to any one of claims 38 to 40, wherein the m$^{th}$ piece of second channel estimation information indicates at least one of the following:

when the signal transmission path between the m$^{th}$ cell node and the terminal device is line-of-sight, the distance between the m$^{th}$ cell node and the terminal device;
when the signal transmission path between the m$^{th}$ cell node and the terminal device is line-of-sight, the signal transmission latency or the signal transmission latency difference between the m$^{th}$ cell node and the terminal device;
when the signal transmission path between the m$^{th}$ cell node and the terminal device is line-of-sight, the signal angle of departure or the signal angle of arrival corresponding to the m$^{th}$ cell node;
when the signal transmission path between the m$^{th}$ cell node and the terminal device is line-of-sight, the signal quality between the m$^{th}$ cell node and the terminal device; and
the actual signal transmission path between the m$^{th}$ cell node and the terminal device is line-of-sight or non-line-of-sight.

42. The apparatus according to any one of claims 38 to 41, wherein the M cell nodes belong to one access network device, or at least two of the M cell nodes belong to different access network devices.

43. A communication apparatus, comprising:

a processing module, configured to determine K pieces of channel information, wherein a k$^{th}$ piece of channel information in the K pieces of channel information is channel information of a channel between a k$^{th}$ cell node in K cell nodes and a terminal device, K is a positive integer, and k is a positive integer from 1 to K; and
a communication module, configured to obtain K pieces of second channel estimation information, wherein a k$^{th}$ piece of second channel estimation information in the K pieces of second channel estimation information corresponds to the channel between the k$^{th}$ cell node and the terminal device, the K pieces of second channel estimation information are determined based on at least one of M pieces of first channel estimation information, an m$^{th}$ piece of first channel estimation information in the M pieces of first channel estimation information is estimation information of a channel between an m$^{th}$ cell node in M cells and the terminal device, the K cells are comprised in the M cells, M is a positive integer greater than 1, and m is a positive integer from 1 to M, wherein the processing module is further configured to train a model based on the K pieces of second channel estimation information, wherein when the model is trained, an input of the model is determined based on the channel information of the channel between the k$^{th}$ cell node and the terminal device, and a label corresponding to the input is determined based on the second channel estimation information corresponding to the channel between the k$^{th}$ cell node and the terminal device.

44. The apparatus according to claim 43, wherein the communication module is further configured to send training request information, and the training request information is for requesting the K pieces of second channel estimation information.

45. The apparatus according to claim 44, wherein the training request information indicates a parameter type indicated by the second channel estimation information.

46. The apparatus according to claim 43 or 44, wherein the communication module is further configured to send the first channel estimation information of the channel between the m$^{th}$ cell node and the terminal device.

**47.** The apparatus according to any one of claims 43 to 46, wherein the $m^{th}$ piece of first channel estimation information indicates one or more of the following parameters: a distance between the $m^{th}$ cell node and the terminal device, a signal transmission latency between the $m^{th}$ cell node and the terminal device, a signal angle of departure or a signal angle of arrival corresponding to the $m^{th}$ cell node, and signal quality between the $m^{th}$ cell node and the terminal device; or the $m^{th}$ piece of first channel estimation information indicates that a signal transmission path between the $m^{th}$ cell node and the terminal device is line-of-sight or non-line-of-sight.

**48.** The apparatus according to any one of claims 43 to 47, wherein the $k^{th}$ piece of second channel estimation information indicates at least one of the following:

when a signal transmission path between the $k^{th}$ cell node and the terminal device is line-of-sight, a distance between the $k^{th}$ cell node and the terminal device;
when the signal transmission path between the $k^{th}$ cell node and the terminal device is line-of-sight, a signal transmission latency or a signal transmission latency difference between the $k^{th}$ cell node and the terminal device;
when the signal transmission path between the $k^{th}$ cell node and the terminal device is line-of-sight, a signal angle of departure or a signal angle of arrival corresponding to the $k^{th}$ cell node;
when the signal transmission path between the $k^{th}$ cell node and the terminal device is line-of-sight, signal quality between the $k^{th}$ cell node and the terminal device; and
an actual signal transmission path between the $k^{th}$ cell node and the terminal device is line-of-sight or non-line-of-sight.

**49.** The apparatus according to any one of claims 43 to 48, wherein the M cell nodes belong to one access network device, or at least two of the M cell nodes belong to different access network devices.

**50.** A communication apparatus, comprising:

a processing module, configured to determine a $t^{th}$ piece of channel information, wherein the $t^{th}$ piece of channel information is channel information of a channel between a $t^{th}$ cell node in T cell nodes and a terminal device, T is a positive integer greater than 1, and t is a positive integer from 1 to T, wherein
the processing module is further configured to determine a $t^{th}$ piece of third channel estimation information based on the $t^{th}$ piece of channel information and a model, the $t^{th}$ piece of third channel estimation information corresponds to the channel between the $t^{th}$ cell node and the terminal device, an input of the model is determined based on the channel information of the channel between the $t^{th}$ cell node and the terminal device, and an output corresponding to the input comprises the $t^{th}$ piece of third channel estimation information; and
a communication module, configured to send the $t^{th}$ piece of third channel estimation information, wherein the $t^{th}$ piece of third channel estimation information is for positioning the terminal device.

**51.** The apparatus according to claim 50, wherein the $t^{th}$ piece of third channel estimation information indicates one or more of the following parameters: a line-of-sight LOS length distance between the $t^{th}$ cell node and the terminal device, a signal transmission latency or a channel transmission latency difference that meets LOS transmission between the $t^{th}$ cell node and the terminal device, a signal angle of departure or a signal angle of arrival that meets LOS transmission and that corresponds to the $t^{th}$ cell node, signal quality that meets LOS transmission between the $t^{th}$ cell node and the terminal device, a type of an actual signal transmission path between the $t^{th}$ cell node and the terminal device, or a type of an actual signal transmission path between the $t^{th}$ cell node and the terminal device, wherein the type is LOS or non-line-of-sight NLOS.

**52.** The apparatus according to claim 50 or 51, wherein when the model is trained, the input of the model is determined based on channel information of a channel between an $m^{th}$ cell node in M cell nodes and the terminal device, and a label corresponding to the input is determined based on second channel estimation information corresponding to the channel between the $m^{th}$ cell node and the terminal device, wherein
M is a positive integer greater than 1, values of M and T are the same or different, m is a positive integer from 1 to M, the second channel estimation information corresponding to the channel between the $m^{th}$ cell node and the terminal device is determined based on at least one of M pieces of first channel estimation information, and an $m^{th}$ piece of first channel estimation information in the M pieces of first channel estimation information is estimation information of the channel between the $m^{th}$ cell node in the M cell nodes and the terminal device.

**53.** A communication apparatus, comprising:
a processor, wherein the processor is coupled to a memory, and the processor is configured to invoke computer program instructions stored in the memory, to perform the method according to any one of claims 1 to 11.

54. A communication apparatus, comprising:
a processor, wherein the processor is coupled to a memory, and the processor is configured to invoke computer program instructions stored in the memory, to perform the method according to any one of claims 12 to 16.

55. A communication apparatus, comprising:
a processor, wherein the processor is coupled to a memory, and the processor is configured to invoke computer program instructions stored in the memory, to perform the method according to any one of claims 17 to 23.

56. A communication apparatus, comprising:
a processor, wherein the processor is coupled to a memory, and the processor is configured to invoke computer program instructions stored in the memory, to perform the method according to any one of claims 24 to 26.

57. A communication system,
comprising the communication apparatus according to any one of claims 27 to 37 and 53, and one or more of the following communication apparatuses:

the communication apparatus according to any one of claims 38 to 42 and 54;
the communication apparatus according to any one of claims 43 to 49 and 55; and
the communication apparatus according to any one of claims 50 to 52 and 56.

58. A computer-readable storage medium, wherein the computer-readable storage medium stores instructions, and when the instructions are run on a computer, the computer is enabled to perform one or more of the following methods: the method according to any one of claims 1 to 11, the method according to any one of claims 12 to 16, the method according to any one of claims 17 to 23, and the method according to any one of claims 24 to 26.

59. A computer program product, comprising instructions, wherein when the instructions are run on a computer, the computer is enabled to perform one or more of the following methods: the method according to any one of claims 1 to 11, the method according to any one of claims 12 to 16, the method according to any one of claims 17 to 23, and the method according to any one of claims 24 to 26.

Access network
device 130

Access network
device 110

Terminal
device 140

Access network
device 120

FIG. 1A

Access network
device 130

Access network
device 110

Positioning
server 150

Terminal
device 140

Access network
device 120

FIG. 1B

FIG. 1C

FIG. 2

FIG. 3

FIG. 4

FIG. 5

$$y = f\left(\sum_{i=0}^{n} w_i x_i + b\right)$$

Neuron

$w_0 x_0$

$w_1 x_1$

$w_n x_n$

$y$

FIG. 6A

FIG. 6B

FIG. 7

| LMF | | First device |
|---|---|---|

S801: Training request information

S802: $m^{th}$ piece of first channel estimation information in M pieces of first channel estimation information

S803: Determine M pieces of second channel estimation information based on at least one of the M pieces of first channel estimation information

S804: K pieces of second channel estimation information

S805: Train a model based on the K pieces of second channel estimation information

FIG. 8

C3

C4

C2

C5

NLOS

C1

C6

FIG. 9

Terminal device/Access network device
(cell node)                                    LMF

...

Channel
information → [Trained model] → Third channel estimation information

Channel
information → [Trained model] → Third channel estimation information

→ [Location estimation]

↓

Second location of the terminal device

FIG. 10

[LMF]                                    [First device]

← S1101: Training request information —

← S1102: $m^{th}$ piece of first channel estimation information in M pieces of first channel estimation information —

S1103: Determine M pieces of second channel estimation information based on at least one of the M pieces of first channel estimation information

← S1104: Channel information of a channel between an $m^{th}$ cell node and a terminal device —

S1105: Train a model based on at least one of the M pieces of second channel estimation information

— S1106: Information indicating the model →

FIG. 11

| Second device | | LMF | | First device |

S1201: Training request information

S1202: $m^{th}$ piece of first channel estimation information in M pieces of first channel estimation information

S1203: Determine M pieces of second channel estimation information based on at least one of the M pieces of first channel estimation information

S1204: M pieces of second channel estimation information

S1205: Channel information of a channel between an $m^{th}$ cell node and a terminal device

S1206: Train a model based on the M pieces of second channel estimation information

S1207: Information indicating the model

FIG. 12

1300

Communication apparatus

1301

Processing module

1302

Communication module

FIG. 13

1400

Communication apparatus

1430

Communication
interface

1410

Processor

1440

1420

Memory

FIG. 14

## INTERNATIONAL SEARCH REPORT

| | International application No. |
|---|---|
| | **PCT/CN2023/078190** |

**A. CLASSIFICATION OF SUBJECT MATTER**

H04W4/02(2018.01)i

According to International Patent Classification (IPC) or to both national classification and IPC

**B. FIELDS SEARCHED**

Minimum documentation searched (classification system followed by classification symbols)

IPC:H04W H04B H04L

Documentation searched other than minimum documentation to the extent that such documents are included in the fields searched

Electronic data base consulted during the international search (name of data base and, where practicable, search terms used)

CNTXT; CNKI; ENTXT; IEEE; 3GPP: 信道, 估计, 信息, 状态, 小区节点, 节点B, 终端, 基站, 网络侧, 设备, UE, 模型, 训练, 输入, 参数, 位置, 标签, 定位, channel, estimat+, information, state, cell, node, nodeB, node-B, terminal, equipment, base station, BS, network side, model, train+, input, pamameter, posit+, label

**C. DOCUMENTS CONSIDERED TO BE RELEVANT**

| Category* | Citation of document, with indication, where appropriate, of the relevant passages | Relevant to claim No. |
|---|---|---|
| A | CN 112152948 A (HUAWEI TECHNOLOGIES CO., LTD.) 29 December 2020 (2020-12-29) description, paragraphs 65-427 | 1-59 |
| A | CN 109219947 A (QUALCOMM INC.) 15 January 2019 (2019-01-15) entire document | 1-59 |
| A | CN 113243135 A (HUAWEI TECHNOLOGIES CO., LTD.) 10 August 2021 (2021-08-10) entire document | 1-59 |
| A | US 2015049703 A1 (NEC CORP.) 19 February 2015 (2015-02-19) entire document | 1-59 |
| A | HUAWEI. "R1-074233 "CQI and PMI resource management"" *3GPP tsg_ran\WG1_RL1*, No. TSGR1_50b, 02 October 2007 (2007-10-02), entire document | 1-59 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 May 2023** | **02 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/078190**

| Patent document cited in search report | | | Publication date (day/month/year) | Patent family member(s) | | | Publication date (day/month/year) |
|---|---|---|---|---|---|---|---|
| CN | 112152948 | A | 29 December 2020 | CN | CN112152948 | B | 03 December 2021 |
| CN | 109219947 | A | 15 January 2019 | WO | 2017161575 | A1 | 28 September 2017 |
| | | | | US | 2021273758 | A1 | 02 September 2021 |
| | | | | US | 11431450 | B2 | 30 August 2022 |
| | | | | EP | 3433988 | A1 | 30 January 2019 |
| | | | | EP | 3433988 | A4 | 13 November 2019 |
| | | | | WO | 2017162106 | A1 | 28 September 2017 |
| | | | | CN | 109219947 | B | 06 August 2021 |
| CN | 113243135 | A | 10 August 2021 | | None | | |
| US | 2015049703 | A1 | 19 February 2015 | WO | 2013146273 | A1 | 03 October 2013 |
| | | | | JPWO | 2013146273 | A1 | 10 December 2015 |
| | | | | JP | 6274439 | B2 | 07 February 2018 |
| | | | | US | 9584288 | B2 | 28 February 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210191893